# EUROPEAN PATENT SPECIFICATION

(11) **EP 4 173 214 B1**
(45) Date of publication and mention of the grant of the patent: **29.07.2026**
(21) Application number: 21743621.1
(22) Date of filing: 23.06.2021
(51) Int. Cl.: H04L 5/00, H04W 72/02, H04W 76/14

(54) **SLOT FORMAT FOR SIDELINK COMMUNICATION**
SCHLITZFORMAT FÜR SIDELINK-KOMMUNIKATION
FORMAT D'INTERVALLE POUR COMMUNICATION EN LIAISON LATÉRALE

(30) Priority: 24.06.2020 GR 20200100365
(43) Date of publication of application: 03.05.2023
(73) Proprietor: QUALCOMM INCORPORATED, San Diego, California 92121-1714 (US)
(72) Inventor: WU, Shuanshuan, San Diego, California 92121-1714 (US); GUBESKYS, Arthur, San Diego, California 92121-1714 (US); GULATI, Kapil, San Diego, California 92121-1714 (US); STEFANATOS, Stelios, San Diego, California 92121-1714 (US)
(74) Representative: Bardehle Pagenberg Partnerschaft mbB Patentanwälte Rechtsanwälte
(86) International application number: PCT/US2021/038766
(87) International publication number: WO 2021/262897

(56) References cited:
- INTEL CORPORATION: "Physical Structure for NR V2X", vol. RAN WG1, no. Prague, Czech Republic; 20190826 - 20190830, 17 August 2019 (2019-08-17), XP051765241, Retrieved from the Internet <URL:http://www.3gpp.org/ftp/tsg_ran/WG1_RL1/TSGR1_98/Docs/R1-1908633.zip> [retrieved on 20190817]
- QUALCOMM INCORPORATED: "Considerations on Physical Layer aspects of NR V2X", vol. RAN WG1, no. Reno, USA; 20191114 - 20191120, 25 November 2019 (2019-11-25), XP051830771, Retrieved from the Internet <URL:https://ftp.3gpp.org/tsg_ran/WG1_RL1/TSGR1_99/Docs/R1-1913493.zip R1-1913493_Considerations on Physical Layer aspects of NR V2X.docx> [retrieved on 20191125]

## Description

### CROSS-REFERENCE TO RELATED APPLICATION

This application claims benefit of and priority to Greece Application No. 20200100365, filed June 24, 2020.

### INTRODUCTION

Aspects of the present disclosure relate to wireless communications, and more particularly, to techniques for sidelink communication.

Wireless communication systems are widely deployed to provide various telecommunication services such as telephony, video, data, messaging, broadcasts, etc. These wireless communication systems may employ multiple-access technologies capable of supporting communication with multiple users by sharing available system resources (e.g., bandwidth, transmit power, etc.). Examples of such multiple-access systems include 3rd Generation Partnership Project (3GPP) Long Term Evolution (LTE) systems, LTE Advanced (LTE-A) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems, to name a few.

These multiple access technologies have been adopted in various telecommunication standards to provide a common protocol that enables different wireless devices to communicate on a municipal, national, regional, and even global level. New radio (e.g., 5G NR) is an example of an emerging telecommunication standard. NR is a set of enhancements to the LTE mobile standard promulgated by 3GPP. NR is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL). To these ends, NR supports beamforming, multiple-input multiple-output (MIMO) antenna technology, and carrier aggregation.

However, as the demand for mobile broadband access continues to increase, there exists a need for further improvements in NR and LTE technology. Preferably, these improvements should be applicable to other multi-access technologies and the telecommunication standards that employ these technologies.
Document INTEL CORPORATION: "Physical Structure for NR V2X", 3GPP DRAFT; R1-1908633 INTEL - EV2X_SL_L1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 17 August 2019 relates to proposals for the physical Structure for NR V2X communications.
Document QUALCOMM INCORPORATED: "Considerations an Physical Layer aspects of NR V2X", 3GPP DRAFT; R1-1913493, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 25 November 2019 relates to considerations on Physical Layer aspects of NR V2X.

### SUMMARY

The systems, methods, and devices of the disclosure each have several aspects, no single one of which is solely responsible for its desirable attributes. Without limiting the scope of this disclosure as expressed by the claims which follow, some features will now be discussed briefly. After considering this discussion, and particularly after reading the section entitled "Detailed Description" one will understand how the features of this disclosure provide for sidelink communications in an unlicensed spectrum.

Certain aspects of the subject matter described in this disclosure can be implemented in a method for wireless communication by a user equipment (UE). The method generally includes refraining from transmitting during a gap portion of a first symbol in time of a sidelink transmission, wherein the first symbol comprises the gap portion and a signal portion; transmitting a signal during the signal portion of the first symbol; and transmitting a data signal of the sidelink transmission in at least one second symbol subsequent in time to the first symbol in the sidelink transmission. As specified in the appended claims the signal is an automatic gain control (AGC) signal that is used for adjusting a gain applied to another signal.

Certain aspects of the subject matter described in this disclosure can be implemented in a method for wireless communication by a user equipment (UE). The method generally includes receiving a) signal during a signal portion of a first symbol in time of a sidelink transmission, wherein the first symbol comprises a gap portion and the signal portion following the gap portion; and receiving a data signal of the sidelink transmission in at least one second symbol subsequent in time to the first symbol in the sidelink transmission. As specified in the appended claims the signal is an automatic gain control (AGC) signal and the method further includes receiving another signal and adjusting a gain applied to the other signal based on the automatic gain control signal.

Further aspects of the present disclosure relate to corresponding wireless communication devices and computer programs.

To the accomplishment of the foregoing and related ends, the one or more aspects comprise the features hereinafter fully described and particularly pointed out in the claims. The following description and the appended drawings set forth in detail certain illustrative features of the one or more aspects. These features are indicative, however, of but a few of the various ways in which the principles of various aspects may be employed.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the drawings. It is to be noted, however, that the appended drawings illustrate only certain aspects of this disclosure and are therefore not to be considered limiting of its scope, for the description may admit to other equally effective aspects.
**FIG. 1** is a block diagram conceptually illustrating an example wireless communication network, in accordance with certain aspects of the present disclosure.
**FIG. 2** is a block diagram conceptually illustrating a design of an example base station (BS) and user equipment (UE), in accordance with certain aspects of the present disclosure.
**FIG. 3** is an example frame format for certain wireless communication systems (e.g., new radio (NR)), in accordance with certain aspects of the present disclosure.
**FIG. 4A** and **FIG. 4B** show diagrammatic representations of example vehicle to everything (V2X) systems, in accordance with certain aspects of the present disclosure.
**FIG. 5** is a schematic diagram illustrating an example model of multiple wireless devices operating in an unlicensed spectrum, in accordance with certain aspects of the present disclosure.
**FIGs. 6A and 6B** are example transmission timelines of sidelink communications, in accordance with certain aspects of the present disclosure.
**FIGs. 7A and 7B** are example transmission timelines of sidelink communications, in accordance with certain aspects of the present disclosure.
**FIG. 8** is a flow diagram illustrating example operations for wireless communication by a UE, in accordance with certain aspects of the present disclosure.
**FIG. 9** is a flow diagram illustrating example operations for wireless communication by a UE, in accordance with certain aspects of the present disclosure.
**FIGs. 10A-E** are example transmission timelines for having a gap period and an AGC signal in a first symbol of a slot, in accordance with certain aspects of the present disclosure.
**FIG. 11** illustrates a communications device that may include various components configured to perform the operations in **FIG. 8****,** in accordance with aspects of the present disclosure.
**FIG. 12** illustrates a communications device that may include various components configured to perform the operations in **FIG. 9****,** in accordance with aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure provide apparatus, methods, processing systems, and computer readable mediums with a transmission scheme that allows a UE and/or other UEs to transmit on a channel without performing a channel access procedure for sidelink communications. Example sidelink communications include vehicle-to-everything (V2X) communications. Though certain aspects may be discussed with respect to V2X communications in a V2X communications system, it should be noted that the aspects may equally apply to other suitable types of sidelink communications systems.

In certain aspects, for wireless communications in unlicensed spectrum, wireless communication devices (e.g., UEs and/or Wi-Fi devices) may perform a channel access procedure referred to as a listen-before-talk (LBT) procedure, where the devices may transmit if the channel, corresponding to a frequency band, is sensed to be free (e.g., idle) prior to transmitting. The time period prior to transmitting where the LBT procedure is performed may be referred to as a sensing occasion. In an LBT procedure, a wireless communication device measures energy on the frequency band and refrains from transmitting on the frequency band should the frequency band be busy, and determines it may communicate on the frequency band should the frequency band be idle. As used herein, the term "idle" for a frequency band means that energy as measured on the frequency band by a device determining idleness is below a threshold level. As used herein, the term "busy" for a frequency band means that energy as measured on the frequency band by the device determining idleness is above the threshold level. Such energy may be due to noise or signals within the frequency band.

In certain aspects, if a time period since a device previously transmitted on an unlicensed frequency band (e.g., a gap in transmission) is greater than a specific threshold (e.g., 16 µs), the device may perform an LBT procedure on the unlicensed frequency band before transmitting a signal on the unlicensed frequency band.

In certain aspects, sidelink communications may be scheduled with a gap time period (e.g., gap symbol in a slot) where UEs do not transmit or receive during the gap time period. In certain aspects, the gap time period may be referred to as a gap symbol. The gap symbol may enable a UE to switch from receive mode to transmit mode, or vice versa. The gap symbol may also account for delayed signal communication, such as due to the UEs not being synchronized in time thereby leading to propagation delay.

In certain aspects, sidelink communications may also be scheduled with at least one time period (e.g., AGC symbol in the slot) for automatic gain control (AGC), where a transmitting UE may transmit a signal to a receiving UE to enable the receiving UE to adjust a gain applied to signals received from the transmitting UE. Such a time period may be referred to as an AGC symbol. In certain aspects, the AGC symbol may be arranged in the first symbol in time in a slot and the gap symbol may be arranged in the last symbol in time of a slot. With such an arrangement, some UEs may refrain from transmitting for at least two consecutive symbols, which may trigger that UE to perform LBT before transmitting, due to the gap in transmission from the UE exceeding the threshold duration.

Certain aspects of the present disclosure provide techniques and/or apparatus for an arrangement of a symbol that allows a UE to transmit on a channel without performing a channel access procedure for sidelink communications For example, in certain aspects, a symbol in a slot may include a gap portion, which may be used for transmission mode switching and/or taking into account the propagation delay in sidelink communications, and a signal portion, which may be used for AGC tuning, for example. A duration of the gap portion may be smaller than a threshold (e.g., 16 µs, 25 µs, etc.), which may be used to trigger LBT procedures, in certain cases. In other words, the signal portion may have a duration in the symbol that provides the gap portion with a duration that is less than the threshold. For example, if the gap portion duration is less than the threshold, the UE can transmit following the gap portion without performing a channel access procedure. In certain cases, the UE may perform a channel access procedure before transmitting following the gap portion, which may allow the UE to share the channel resource with another UE. Aspects of the present disclosure may enable sidelink communication performance, such as lower latencies and/or higher data rates, for example, due to the ability to send data signals without performing LBT or other channel sensing after the gap portion.

Such techniques may be used, for example, in sidelink communications between wireless communication devices. In other examples, the wireless communication devices may include cellular vehicle-to-everything (CV2X) devices. It should be noted that though certain aspects are described with respect to CV2X devices and communication in the unlicensed band, it can be appreciated that the aspects may similarly be applicable to other scenarios, such as any communications (e.g., sidelink communications) in an unlicensed band, communications (e.g., sidelink communications) in a licensed band, etc.

An unlicensed band in an unlicensed spectrum refers to any frequency band(s) that are not subject to licensed use under regulatory practice, such that they are open to use by any devices, and not just devices that have a license to use the particular frequency band(s).

The electromagnetic spectrum, such as in a licensed band, is often subdivided, based on frequency/wavelength, into various classes, bands, channels, etc. In 5G NR two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR₁ and FR₂ are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

The following description provides examples of refraining from transmitting during a gap portion of a symbol, transmitting or receiving an automatic gain control (AGC) signal during an AGC portion of the symbol, and transmitting or receiving a data signal in communication systems, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to, or other than, the various aspects of the disclosure set forth herein. It should be understood that any aspect of the disclosure disclosed herein may be embodied by one or more elements of a claim. The word "exemplary" is used herein to mean "serving as an example, instance, or illustration." Any aspect described herein as "exemplary" is not necessarily to be construed as preferred or advantageous over other aspects.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a subcarrier, a frequency channel, a tone, a subband, etc. Each frequency may support a single RAT in a given geographic area in order to avoid interference between wireless networks of different RATs.

The techniques described herein may be used for various wireless networks and radio technologies. While aspects may be described herein using terminology commonly associated with 3G, 4G, and/or new radio (e.g., 5G NR) wireless technologies, aspects of the present disclosure can be applied in other generation-based communication systems.

NR access may support various wireless communication services, such as enhanced mobile broadband (eMBB) targeting wide bandwidth (e.g., 80 MHz or beyond), millimeter wave (mmW) targeting high carrier frequency (e.g., e.g., 24 GHz to 53 GHz or beyond), massive machine type communications MTC (mMTC) targeting nonbackward compatible MTC techniques, and/or mission critical targeting ultra-reliable low-latency communications (URLLC). These services may include latency and reliability requirements. These services may also have different transmission time intervals (TTI) to meet respective quality of service (QoS) requirements. In addition, these services may co-exist in the same subframe. NR supports beamforming and beam direction may be dynamically configured. MIMO transmissions with precoding may also be supported. MIMO configurations in the DL may support up to 8 transmit antennas with multi-layer DL transmissions up to 8 streams and up to 2 streams per UE. Multi-layer transmissions with up to 2 streams per UE may be supported. Aggregation of multiple cells may be supported with up to 8 serving cells.

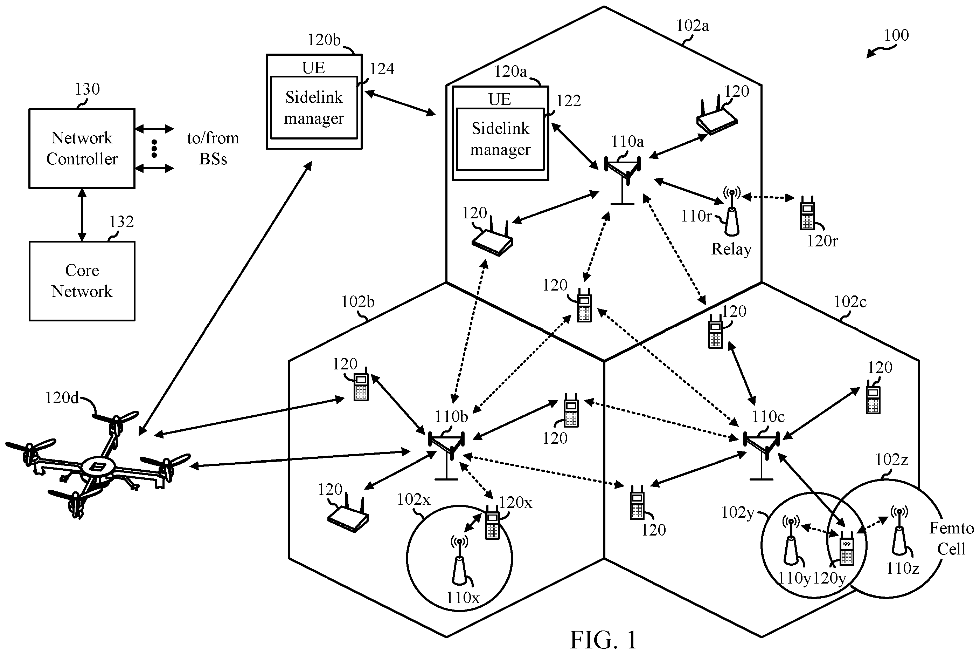

**FIG. 1** illustrates an example wireless communication network 100 in which aspects of the present disclosure may be performed. For example, the wireless communication network 100 may be an NR system (e.g., a 5G NR network). As shown in **FIG. 1****,** the wireless communication network 100 may be in communication with a core network 132. The core network 132 may in communication with one or more base station (BSs) 110 and/or user equipment (UE) 120 in the wireless communication network 100 via one or more interfaces.

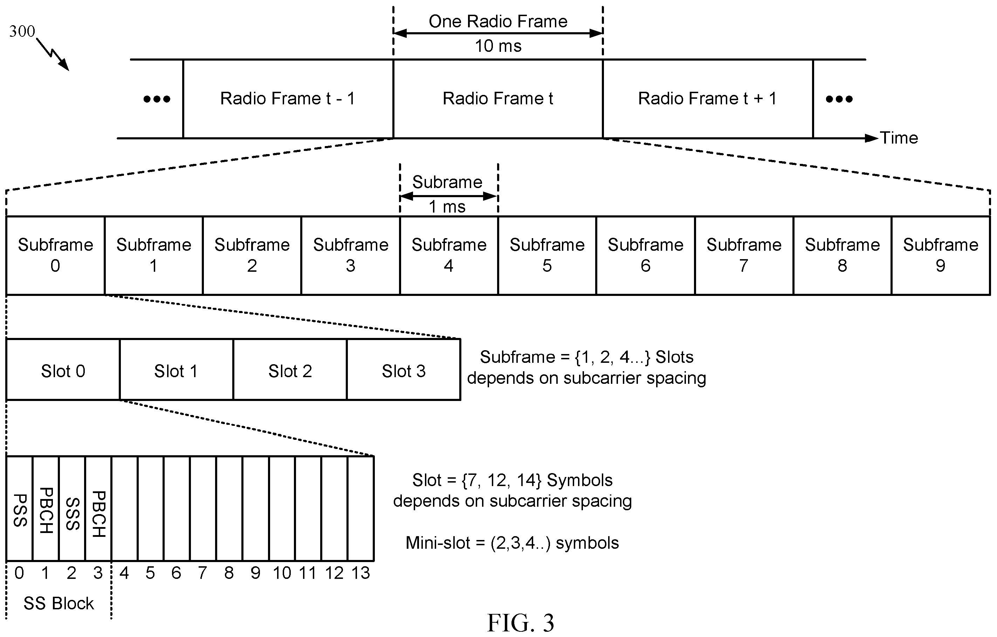

According to certain aspects, the BSs 110 and UEs 120 may be configured to use a slot format for sidelink communication, such as discussed further with respect to **FIG. 3****.** As shown in **FIG. 1****,** the UE 120a includes a sidelink manager 122 that refrains from transmitting during a gap portion of a first symbol of a slot, wherein the first symbol comprises the gap portion and a signal portion; transmits a signal during the signal portion of the first symbol; and transmits a data signal of a sidelink transmission in at least one second symbol subsequent to the first symbol in the slot, in accordance with aspects of the present disclosure. A UE 120b includes a sidelink manager 124 that detects a gap portion of a first symbol of a slot, wherein the first symbol comprises the gap portion and a signal portion; receives a signal during the signal portion of the first symbol; and receives a data signal of a sidelink transmission in at least one second symbol subsequent to the first symbol in the slot, in accordance with aspects of the present disclosure.

As illustrated in **FIG. 1****,** the wireless communication network 100 may include a number of BSs 110a-z (each also individually referred to herein as BS 110 or collectively as BSs 110) and other network entities. A BS 110 may provide communication coverage for a particular geographic area, sometimes referred to as a "cell", which may be stationary or may move according to the location of a mobile BS 110. In some examples, the BSs 110 may be interconnected to one another and/or to one or more other BSs or network nodes (not shown) in wireless communication network 100 through various types of backhaul interfaces (e.g., a direct physical connection, a wireless connection, a virtual network, or the like) using any suitable transport network. In the example shown in **FIG. 1****,** the BSs 110a, 110b and 110c may be macro BSs for the macro cells 102a, 102b and 102c, respectively. The BS 110x may be a pico BS for a pico cell 102x. The BSs 110y and 110z may be femto BSs for the femto cells 102y and 102z, respectively. A BS may support one or multiple cells.

The BSs 110 communicate with UEs 120a-y (each also individually referred to herein as UE 120 or collectively as UEs 120) in the wireless communication network 100. The UEs 120 (e.g., 120x, 120y, etc.) may be dispersed throughout the wireless communication network 100, and each UE 120 may be stationary or mobile. In one example, a quadcopter, drone, or any other unmanned aerial vehicle (UAV) or remotely piloted aerial system (RPAS) 120d may be configured to function as a UE. Wireless communication network 100 may also include relay stations (e.g., relay station 110r), also referred to as relays or the like, that receive a transmission of data and/or other information from an upstream station (e.g., a BS 110a or a UE 120r) and sends a transmission of the data and/or other information to a downstream station (e.g., a UE 120 or a BS 110), or that relays transmissions between UEs 120, to facilitate communication between devices.

A network controller 130 may be in communication with a set of BSs 110 and provide coordination and control for these BSs 110 (e.g., via a backhaul). In aspects, the network controller 130 may be in communication with a core network 132 (e.g., a 5G Core Network (5GC)), which provides various network functions such as Access and Mobility Management, Session Management, User Plane Function, Policy Control Function, Authentication Server Function, Unified Data Management, Application Function, Network Exposure Function, Network Repository Function, Network Slice Selection Function, etc.

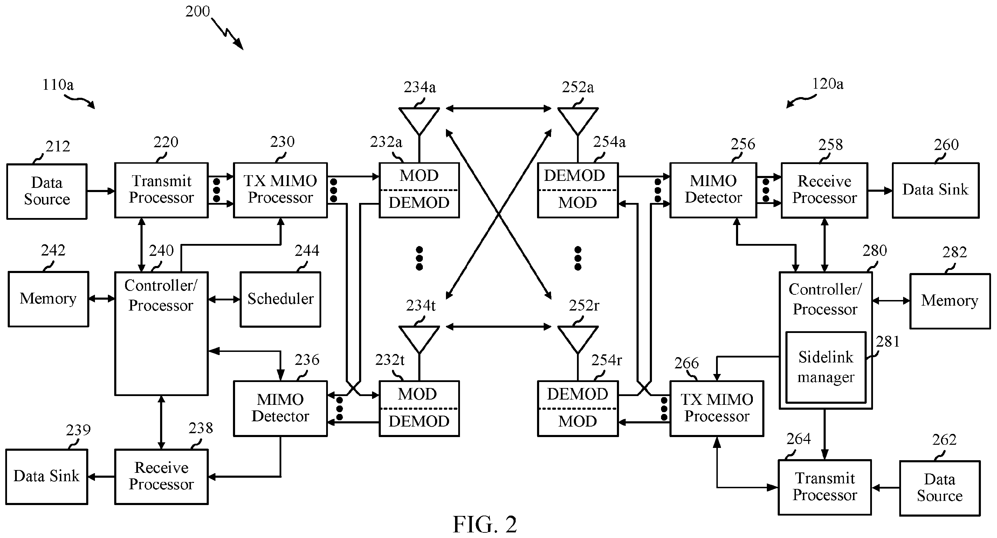

**FIG. 2** illustrates example components of BS 110a and UE 120a (e.g., the wireless communication network 100 of **FIG. 1**), which may be used to implement aspects of the present disclosure.

At the BS 110a, a transmit processor 220 may receive data from a data source 212 and control information from a controller/processor 240. The control information may be for the physical broadcast channel (PBCH), physical control format indicator channel (PCFICH), physical hybrid ARQ indicator channel (PHICH), physical downlink control channel (PDCCH), group common PDCCH (GC PDCCH), etc. The data may be for the physical downlink shared channel (PDSCH), etc. A medium access control (MAC)-control element (MAC-CE) is a MAC layer communication structure that may be used for control command exchange between wireless nodes. The MAC-CE may be carried in a shared channel such as a physical downlink shared channel (PDSCH), a physical uplink shared channel (PUSCH), or a physical sidelink shared channel (PSSCH).

The processor 220 may process (e.g., encode and symbol map) the data and control information to obtain data symbols and control symbols, respectively. The transmit processor 220 may also generate reference symbols, such as for the primary synchronization signal (PSS), secondary synchronization signal (SSS), PBCH demodulation reference signal (DMRS), and channel state information reference signal (CSI-RS). A transmit (TX) multiple-input multiple-output (MIMO) processor 230 may perform spatial processing (e.g., precoding) on the data symbols, the control symbols, and/or the reference symbols, if applicable, and may provide output symbol streams to the modulators (MODs) 232a-232t. Each modulator 232 may process a respective output symbol stream (e.g., for OFDM, etc.) to obtain an output sample stream. Each modulator may further process (e.g., convert to analog, amplify, filter, and upconvert) the output sample stream to obtain a downlink signal. Downlink signals from modulators 232a-232t may be transmitted via the antennas 234a-234t, respectively.

At the UE 120a, the antennas 252a-252r may receive the downlink signals from the BS 110a and may provide received signals to the demodulators (DEMODs) in transceivers 254a-254r, respectively. Each demodulator 254 may condition (e.g., filter, amplify, downconvert, and digitize) a respective received signal to obtain input samples. Each demodulator may further process the input samples (e.g., for OFDM, etc.) to obtain received symbols. A MIMO detector 256 may obtain received symbols from all the demodulators 254a-254r, perform MIMO detection on the received symbols if applicable, and provide detected symbols. A receive processor 258 may process (e.g., demodulate, deinterleave, and decode) the detected symbols, provide decoded data for the UE 120a to a data sink 260, and provide decoded control information to a controller/processor 280.

On the uplink, at UE 120a, a transmit processor 264 may receive and process data (e.g., for the physical uplink shared channel (PUSCH)) from a data source 262 and control information (e.g., for the physical uplink control channel (PUCCH) from the controller/processor 280. The transmit processor 264 may also generate reference symbols for a reference signal (e.g., for the sounding reference signal (SRS)). The symbols from the transmit processor 264 may be precoded by a TX MIMO processor 266 if applicable, further processed by the modulators in transceivers 254a-254r (e.g., for SC-FDM, etc.), and transmitted to the BS 110a. At the BS 110a, the uplink signals from the UE 120a may be received by the antennas 234, processed by the modulators 232, detected by a MIMO detector 236 if applicable, and further processed by a receive processor 238 to obtain decoded data and control information sent by the UE 120a. The receive processor 238 may provide the decoded data to a data sink 239 and the decoded control information to the controller/processor 240.

The memories 242 and 282 may store data and program codes for BS 110a and UE 120a, respectively. A scheduler 244 may schedule UEs for data transmission on the downlink and/or uplink.

Antennas 252, processors 266, 258, 264, and/or controller/processor 280 of the UE 120a and/or antennas 234, processors 220, 230, 238, and/or controller/processor 240 of the BS 110a may be used to perform the various techniques and methods described herein. For example, as shown in **FIG. 2****,** the controller/processor 280 of the UE 120a has a sidelink manager 281 that refrains from transmitting during a gap portion of a first symbol of a slot, wherein the first symbol comprises the gap portion and a signal portion; transmits a signal during the signal portion of the first symbol; and transmits a data signal of a sidelink transmission in at least one second symbol subsequent to the first symbol in the slot, according to aspects described herein. The sidelink manager 281 also detects a gap portion of a first symbol of a slot, wherein the first symbol comprises the gap portion and a signal portion; receives a signal during the signal portion of the first symbol; and receives a data signal of a sidelink transmission in at least one second symbol subsequent to the first symbol in the slot, according to aspects described herein. Although shown at the controller/processor, other components of the UE 120a and BS 110a may be used to perform the operations described herein.

NR may utilize orthogonal frequency division multiplexing (OFDM) with a cyclic prefix (CP) on the uplink and downlink. NR may support half-duplex operation using time division duplexing (TDD). OFDM and single-carrier frequency division multiplexing (SC-FDM) partition the system bandwidth into multiple orthogonal subcarriers, which are also commonly referred to as tones, bins, etc. Each subcarrier may be modulated with data. Modulation symbols may be sent in the frequency domain with OFDM and in the time domain with SC-FDM. The spacing between adjacent subcarriers may be fixed, and the total number of subcarriers may be dependent on the system bandwidth. The minimum resource allocation, called a resource block (RB), may be 12 consecutive subcarriers. The system bandwidth may also be partitioned into subbands. For example, a subband may cover multiple RBs. NR may support a base subcarrier spacing (SCS) of 15 KHz and other SCS may be defined with respect to the base SCS (e.g., 30 kHz, 60 kHz, 120 kHz, 240 kHz, etc.).

**FIG. 3** is a diagram showing an example of a frame format 300 for NR. The transmission timeline for each of the downlink and uplink may be partitioned into units of radio frames. Each radio frame may have a predetermined duration (e.g., 10 ms) and may be partitioned into 10 subframes, each of 1 ms, with indices of 0 through 9. Each subframe may include a variable number of slots (e.g., 1, 2, 4, 8, 16, ... slots) depending on the SCS. Each slot may include a variable number of symbol periods (e.g., 7, 12, or 14 symbols) depending on the SCS. The symbol periods in each slot may be assigned indices. A mini-slot, which may be referred to as a sub-slot structure, refers to a transmit time interval having a duration less than a slot (e.g., 2, 3, or 4 symbols). Each symbol in a slot may indicate a link direction (e.g., DL, UL, or flexible) for data transmission and the link direction for each subframe may be dynamically switched. The link directions may be based on the slot format. Each slot may include DL/UL data as well as DL/UL control information. In certain aspects, two symbols (e.g., the first two in time) of a slot of frame format 300 may be configured or used for communication as discussed herein. For example, a first symbol may comprise a gap portion and a signal portion. Further, a data signal may be transmitted on a second symbol.

In NR, a synchronization signal block (SSB) is transmitted. In certain aspects, SSBs may be transmitted in a burst where each SSB in the burst corresponds to a different beam direction for UE-side beam management (e.g., including beam selection and/or beam refinement). The SSB includes a PSS, a SSS, and a two symbol PBCH. The SSB can be transmitted in a fixed slot location, such as the symbols 0-3 as shown in **FIG. 3****.** The PSS and SSS may be used by UEs for cell search and acquisition. The PSS may provide half-frame timing, the SS may provide the CP length and frame timing. The PSS and SSS may provide the cell identity. The PBCH carries some basic system information, such as downlink system bandwidth, timing information within radio frame, SS burst set periodicity, system frame number, etc. The SSBs may be organized into SS bursts to support beam sweeping. Further system information such as, remaining minimum system information (RMSI), system information blocks (SIBs), other system information (OSI) can be transmitted on a physical downlink shared channel (PDSCH) in certain subframes. The SSB can be transmitted up to sixty-four times, for example, with up to sixty-four different beam directions for mmWave. The multiple transmissions of the SSB are referred to as a SS burst set. SSBs in an SS burst set may be transmitted in the same frequency region, while SSBs in different SS bursts sets can be transmitted at different frequency regions.

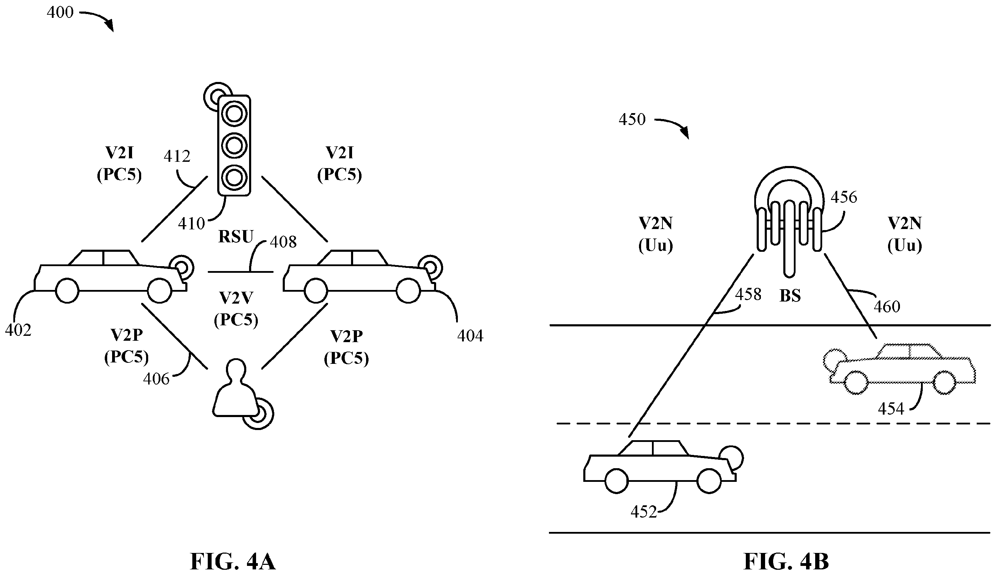

**FIG. 4A** and **FIG. 4B** show diagrammatic representations of example V2X systems, in accordance with some aspects of the present disclosure. For example, the vehicles shown in **FIG. 4A** and **FIG. 4B** may communicate via sidelink channels and may relay sidelink transmissions as described herein. The V2X systems, may be examples of sidelink communication systems discussed herein, and the vehicles and other devices may be configured to communicate over sidelink frequency channels as discussed herein.

The V2X systems provided in **FIG. 4A** and **FIG. 4B** provide two complementary transmission modes. A first transmission mode (also referred to as mode 4), shown by way of example in **FIG. 4A**, involves direct communications (for example, also referred to as sidelink communications) between participants in proximity to one another in a local area. A second transmission mode (also referred to as mode 3), shown by way of example in **FIG. 4B**, involves network communications through a network, which may be implemented over a Uu interface (for example, a wireless communication interface between a radio access network (RAN) and a UE).

Referring to **FIG. 4A****,** a V2X system 400 (for example, including vehicle-to-vehicle (V2V) communications) is illustrated with two vehicles 402, 404. The first transmission mode allows for direct communication between different participants in a given geographic location. As illustrated, a vehicle can have a wireless communication link 406 with an individual (V2P) (for example, via a UE) through a PC5 interface. Communications between the vehicles 402 and 404 may also occur through a PC5 interface 408. In a like manner, communication may occur from a vehicle 402 to other highway components (for example, highway component 410), such as a traffic signal or sign (V2I) through a PC5 interface 412. With respect to each communication link illustrated in **FIG. 4A****,** two-way communication may take place between elements, therefore each element may be a transmitter and a receiver of information. The V2X system 400 may be a self-managed system implemented without assistance from a network entity. A self-managed system may enable improved spectral efficiency, reduced cost, and increased reliability as network service interruptions do not occur during handover operations for moving vehicles. The V2X system may be configured to operate in a licensed or unlicensed spectrum, thus any vehicle with an equipped system may access a common frequency and share information. Such harmonized/common spectrum operations allow for safe and reliable operation.

**FIG. 4B** shows a V2X system 450 for communication between a vehicle 452 and a vehicle 454 through a network entity 456. These network communications may occur through discrete nodes, such as a BS (e.g., the BS 110a), that sends and receives information to and from (for example, relays information between) vehicles 452, 454. The network communications through vehicle to network (V2N) links 458 and 460 may be used, for example, for long-range communications between vehicles, such as for communicating the presence of a car accident a distance ahead along a road or highway. Other types of communications may be sent by the wireless node to vehicles, such as traffic flow conditions, road hazard warnings, environmental/weather reports, and service station availability, among other examples. Such data can be obtained from cloud-based sharing services.

Roadside units (RSUs) may be utilized. An RSU may be used for V2I communications. In some examples, an RSU may act as a forwarding node to extend coverage for a UE. In some examples, an RSU may be co-located with a BS or may be standalone. RSUs can have different classifications. For example, RSUs can be classified into UE-type RSUs and Micro NodeB-type RSUs. Micro NodeB-type RSUs have similar functionality as a Macro eNB or gNB. The Micro NodeB-type RSUs can utilize the Uu interface. UE-type RSUs can be used for meeting tight quality-of-service (QoS) requirements by minimizing collisions and improving reliability. UE-type RSUs may use centralized resource allocation mechanisms to allow for efficient resource utilization. Critical information (e.g., such as traffic conditions, weather conditions, congestion statistics, sensor data, etc.) can be broadcast to UEs in the coverage area. Relays can rebroadcasts critical information received from some UEs. UE-type RSUs may be a reliable synchronization source.

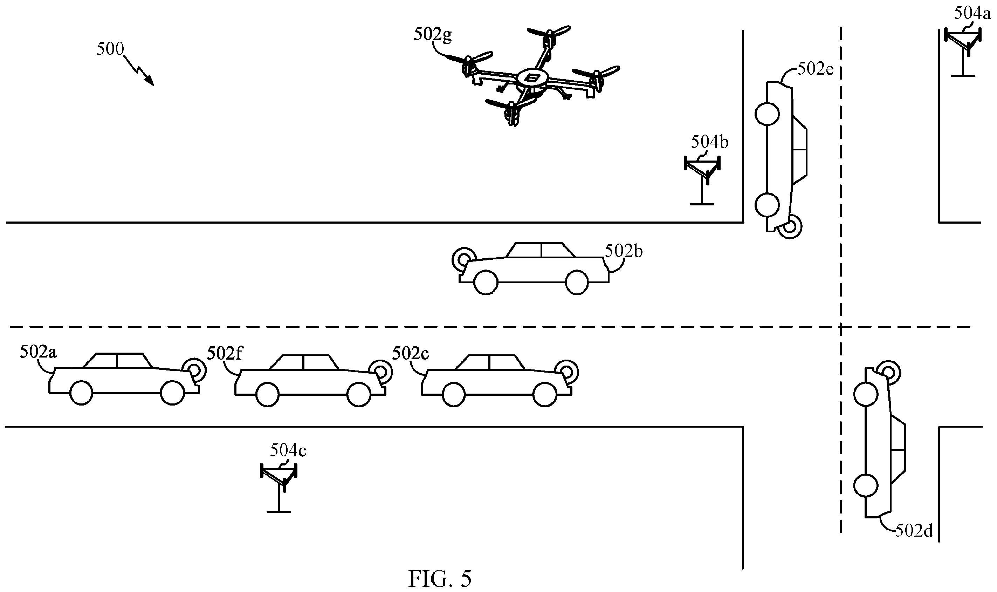

**FIG. 5** is a schematic diagram illustrating an example network 500 of multiple CV2X devices operating in an unlicensed spectrum. The unlicensed spectrum may be an example of a sidelink frequency band. Further, the network 500 may be an example of a sidelink communication system. The CV2X devices 502 may be configured to communicate on sidelink frequency channels as discussed herein. For example, any of the CV2X devices 502 may communicate with any other of the CV2X devices 502.

In the illustrated example, seven CV2X devices (e.g., a first CV2X device 502a, a second CV2X device 502b, a third CV2X device 502c, a fourth CV2X device 502d, a fifth CV2X device 502e, a sixth CV2X device 502f, and a seventh CV2X device 502g) - collectively referred to as CV2X devices 502) may operate in an unlicensed spectrum with other non-CV2X devices (e.g., non-CV2X devices 504a-c - collectively referred to as non-CV2X devices 504). In some examples, the first CV2X device 502a, the sixth CV2X device 502f, and the third CV2X device 502c may be part of a fleet or platoon. In transportation, platooning or flocking is a method for driving a group of vehicles together. It is meant to increase the capacity of roads via an automated highway system. Platoons decrease the distances between cars or trucks, such as based on SL communications.

Although the example provided is illustrative of six automotive CV2X devices in a traffic setting and a drone or other aerial vehicle CV2X device, it can be appreciated that CV2X devices and environments may extend beyond these, and include other wireless communication devices and environments. For example, the CV2X devices 502 may include UEs (e.g., UE 120 of FIG. 1) and/or road-side units (RSUs) operated by a highway authority, and may be devices implemented on motorcycles or carried by users (e.g., pedestrian, bicyclist, etc.), or may be implemented on another aerial vehicle such as a helicopter.

The CV2X devices 502 may include UEs (e.g., UE 120 of FIG. 1), and may be devices implemented on motorcycles or carried by users (e.g., pedestrian, bicyclist, etc.), or implemented as a roadside unit.

In certain aspects, sidelink communications (e.g., vehicle-to-everything (V2X) communications) may happen in a time-division duplexing (TDD) manner. That is, a UE communicating in sidelink both transmits and receives sidelink signals in the same carrier or frequency band, but transmits at different times than it receives. When a user equipment (UE) communicates in a TDD manner, in certain aspects, the UE may be scheduled to neither transmit nor receive during a period (e.g. a gap period, which may be a gap symbol), such that the UE's hardware (e.g., radio front-end) can switch from transmit (Tx) mode to receive (Rx) mode, or vice-versa. In certain aspects, sidelink communications may be decoupled from synchronization, meaning they are not synchronized in time, as there may be no central unit providing synchronization. For example, a receiving UE may receive sidelink transmissions from a device A (e.g., another UE), but may be synchronized to a device B (e.g., another UE, a base station (BS), or a global navigation satellite system (GNSS)). The decoupling may lead to a propagation delay of unknown length at the receiving UE, for example, for the sidelink transmissions from the device A due to the difference in synchronization sources. The gap period may accommodate such propagation delay, as since nothing is scheduled for transmission or reception during the gap period, the receiving UE is able to receive the delayed signal during the gap period without it conflicting with other communications.

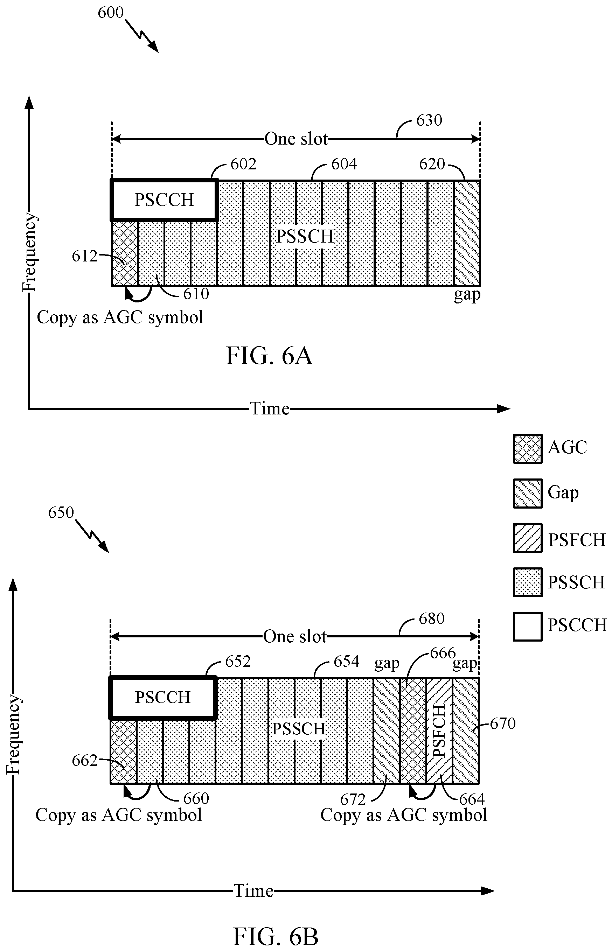

In certain aspects, such as in certain CV2X systems, the last symbol in time of a slot may be reserved as a gap period referred to as a gap symbol for certain UEs, meaning there may be no signal scheduled for transmission in this gap symbol and the UEs may not be scheduled to receive in the gap symbol. The gap symbol may provide enough time for a UE to switch from Tx (or Rx) mode to Rx (or Tx) mode, for example. In certain aspects, when a slot has physical sidelink feedback channel (PSFCH) (for hybrid automatic retransmission request (HARQ) feedback) resources configured, there may be two OFDM symbols reserved as gaps (see description below with reference to **FIGs. 6A and 6B****).**

In certain aspects, sidelink communications may have a near-far effect. For example, a receiving UE receives a transmission at a higher power if the transmitting UE is closer to the receiving UE (e.g., 100 meters) than if the transmitting UE is far away from the receiving UE (e.g., 1 km). Therefore, received signal powers may vary across slots at a receiving UE. In certain aspects, a first symbol in time in a slot (or a transmission) may be used for automatic gain control (AGC) training to adjust a gain used by the UE for transmitting to accommodate for the near-far effect. In certain cases, a receiving UE may not decode the AGC symbol, and thus the AGC symbol need not carry useful information. For example, in certain aspects, the AGC symbol may be a copy of the next symbol transmitted within the slot.

**FIGs. 6A and 6B** are example transmission timelines 600 and 650 of sidelink communications. In the transmission timeline 600, a UE (e.g., UE 120a, shown in **FIG. 1****)** transmits a physical sidelink control channel (PSCCH) 602 that allocates other symbols in the slot 630 for a physical sidelink shared channel (PSSCH) 604. As previously mentioned, the UE may transmit an AGC signal in symbol 612, which may be a copy of the OFDM symbol 610 occurring next in time from the symbol 612. The UE also refrains from transmitting during the final symbol 620, a gap symbol, of the slot.

Referring to **FIG. 6B****,** in the transmission timeline 650, PSFCH resources are configured in the symbol 664. A UE (e.g., UE 120a, shown in **FIG. 1**) transmits a PSCCH 652 that allocates other symbols in the slot 680 for a PSSCH 654. As previously mentioned, the UE may transmit an AGC signal in symbol 662, which may be a copy of the OFDM symbol 660 occurring next in time from the symbol 662. Another UE, (e.g., UE 120b, shown in **FIG. 1**) receives the PSCCH 652 and the PSSCH 654. The other UE transmits HARQ feedback regarding the PSSCH 654 (or alternatively or additionally a PSSCH transmitted in a previous slot in time according to the same format as slot 680) during the symbol 664. The other UE copies the OFDM symbol 664 into the symbol 666 for use as an AGC symbol. Both UEs refrain from transmitting during the final symbol 670 of the slot and during the symbol 672 immediately before the AGC symbol 666.

In the above described sidelink communication design, there are at least 2 symbols (e.g., symbols 612, 620 in **FIG. 6A** and symbols 662, 666, 670, 672 in **FIG. 6B**), out of 14 symbols in a slot, which are used for an AGC signal and/or gap period.

Channel access and/or resource reservations may depend on sensing of a channel to identify if that channel is idle using an LBT procedure, as discussed. In certain cases, the LBT procedure may be triggered before transmitting on a device if the device has not transmitted for a specific threshold time, for example, 16 microseconds (µs). As an example, the duration of the gap period and/or AGC signal may exceed the threshold, which will trigger the UE to perform LBT, in certain cases.

### Example Slot Format for Sidelink Communication

Certain aspects of the present disclosure provide techniques for configuring symbol(s) for sidelink communications, wherein the symbol(s) include a gap portion and a signal portion, which may be used for automatic gain control (AGC) tuning. A UE performing sidelink communications may refrain from transmitting during a gap portion of a symbol, transmit or receive an automatic gain control (AGC) signal during a signal portion of the symbol, and transmit or receive a data signal.

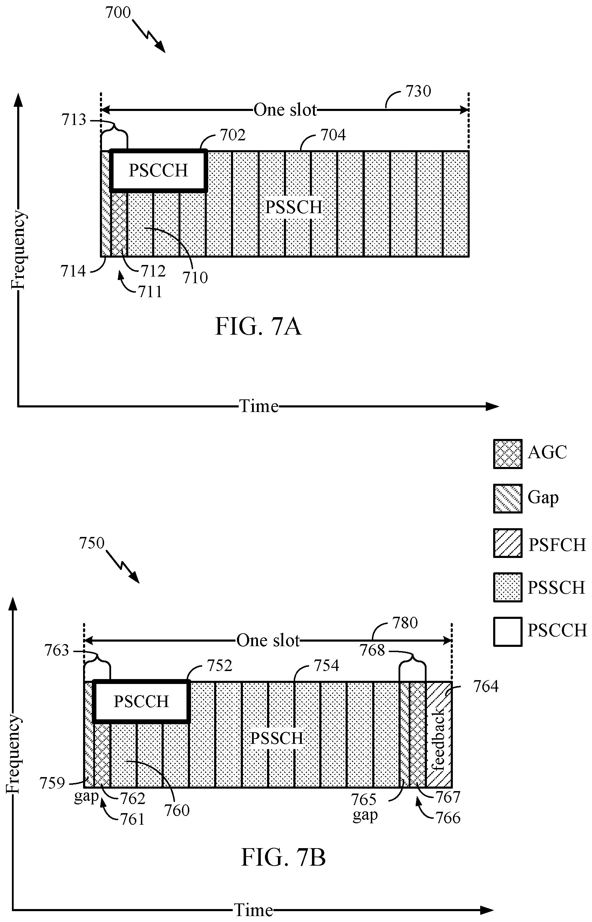

According to certain aspects of the present disclosure, techniques are provided to use 13 out of 14 symbols in slots without PSFCH (leaving 1 symbol unused) and to use 12 symbols out of 14 symbols in in slots with PSFCH, for example, as depicted in **FIGs. 7A** and **7B****.**

According to certain aspects of the present disclosure, a UE may transmit or receive a sidelink communication using a sidelink resource structure design that accommodates a gap used for turnaround and/or accommodating propagation delay and a signal used for AGC training in the same symbol.

In certain aspects of the present disclosure, a duration of the gap is smaller than a threshold (e.g., 16 µs, 25 µs, etc.), so multiple UEs may share the channel resource. For example, a UE can transmit following the gap (e.g., which is smaller than a gap threshold specified by regional regulations) without performing a channel access procedure (e.g., a Type 1 channel access based on channel sensing with random back-off; in some contexts, it may be referred to as Category-4 listen before talk (LBT), similar to as defined in 3GPP Release 15 (TS 37.213) herein incorporated by reference); in other words, the UE may transmit following the gap without performing channel sensing (e.g., LBT), or the UE may perform a channel access procedure (e.g., a Type-2 channel access procedure similar to as defined in 3GPP Release 15 herein incorporated by reference) before transmitting following the gap, and thus share the channel resource with another UE. Aspects of the present disclosure may enable sidelink communication performance, such as lower latencies and/or higher data rates, for example, due to the ability to send data signals without performing LBT or other channel sensing.

**FIGs. 7A and 7B** are example transmission timelines 700 and 750 of sidelink communications, according to aspects of the present disclosure. In the transmission timeline 700, a UE (e.g., UE 120a, shown in **FIG. 1**) transmits a PSCCH 702 that allocates other symbols in the slot 730 for PSSCH 704. The UE transmits an AGC signal 711 during an AGC portion 712 of the symbol 713 for AGC training. The UE also refrains from transmitting during a gap portion 714 of the symbol 713. The gap portion 714 may be shorter than a threshold (e.g., 16 µs, 25 µs, etc.) associated with triggering an LBT procedure so that the UE can transmit without performing LBT, for example, a Type 1 channel access (or, a Category 4 LBT).

Referring to **FIG. 7B**, in the transmission timeline 750, PSFCH resources are configured in the symbol 763. A UE (e.g., UE 120a, shown in **FIG. 1**) transmits a PSCCH 752 that allocates other symbols in the slot 780 for a PSSCH 754. The UE transmits an AGC signal 761 during an AGC portion 762 of the symbol 763. Another UE, (e.g., UE 120b, shown in **FIG. 1**) may transmit HARQ feedback regarding a PSSCH on a PSFCH during the symbol 764. The other UE transmits an AGC signal 766 during an AGC portion 767 of the symbol 768. Both UEs refrain from transmitting during a gap portion 759 of the symbol 763 and during a gap portion 765 of the symbol 768. Each of the gap portion 759 and the gap portion 765 may be shorter than the threshold associated with triggering an LBT procedure. While both the transmission timelines 700 and 750 illustrate a gap portion and an AGC portion occurring during the first symbols in time of transmissions that begin in the first symbols (e.g., the symbol having index=o) 713 and 763 in the slots 730 and 780, the present disclosure is not so limited, and a gap portion and AGC portion (with AGC signal) may occur during the first symbol of a transmission that may begin in any symbol (e.g., any of the symbols having any index) of a slot.

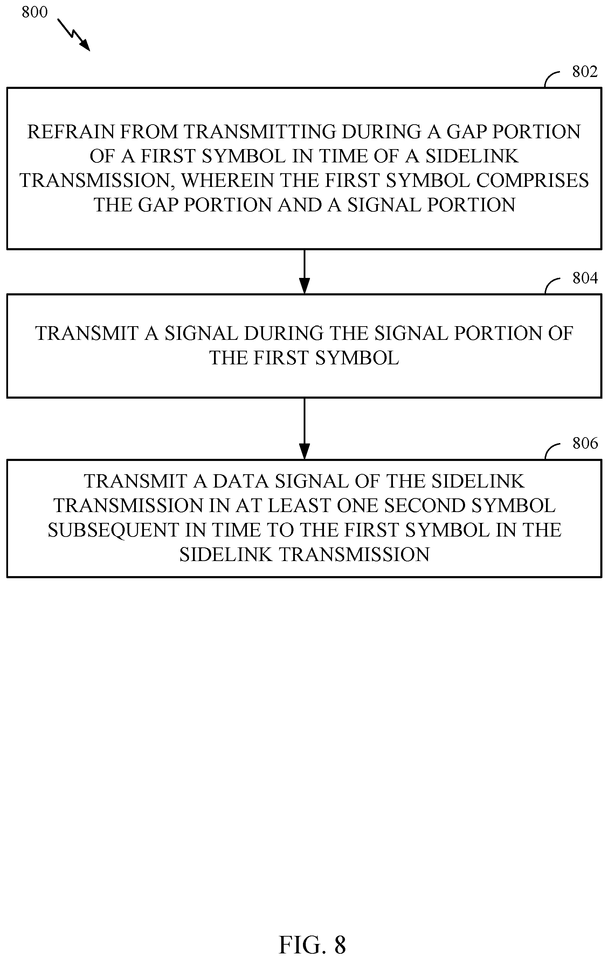

**FIG. 8** is a flow diagram illustrating example operations 800 for wireless communication, in accordance with certain aspects of the present disclosure. The operations 800 may be performed, for example, by UE (e.g., the UE 120a in the wireless communication network 100). The operations 800 may be implemented as software components that are executed and run on one or more processors (e.g., controller/processor 280 of **FIG. 2**). Further, the transmission and reception of signals by the UE in operations 800 may be enabled, for example, by one or more antennas (e.g., antennas 252 of **FIG. 2**). In certain aspects, the transmission and/or reception of signals by the UE may be implemented via a bus interface of one or more processors (e.g., controller/processor 280) obtaining and/or outputting signals.

The operations 800 may begin, at block 802, where the UE may refrain from transmitting during a gap portion of a first symbol in time of a sidelink transmission, where the first symbol comprises the gap portion and a signal portion. As used herein, the first symbol in time may refer to a certain symbol position in a sequence of symbols over time. As mentioned above, the first symbol of the sidelink transmission of block 802 may be any symbol of the slot and is not necessarily the first symbol in the sequence of symbols in the slot. In certain aspects, the UE may identify the gap portion with a first duration and the signal portion with a second duration, where the first and second durations may be portions of a symbol duration. That is, the UE may determine the duration(s) for the gap portion and/or signal portion. In certain cases, the UE may be preconfigured with the duration(s) of the gap portion and/or signal portion. In certain cases, the UE may be configured by a network entity (e.g., a base station and/or RSU) and/or another UE with the duration(s) of the gap portion and/or signal portion.

At block 804, the UE may transmit a signal during the signal portion of the first symbol. In aspects, the signal may include an AGC signal. For example, the signal may enable the other UE receiving the signal to perform automatic gain control operations, such as adjusting a gain applied to a received signal at a receiver based on one or more properties of the signal (e.g., the received power of the signal).

Operations 800 may continue at block 806 where the UE may transmit a data signal of the sidelink transmission in at least one second symbol subsequent in time to the first symbol in the sidelink transmission. As used herein, the second symbol subsequent in time to the first symbol may refer to a symbol position for the second symbol that follows the symbol position for the first symbol in a sequence of symbols.

According to aspects of the present disclosure, the AGC signal of block 804 may include a first orthogonal frequency division multiplexing (OFDM) symbol without a cyclic prefix (CP), and the data signal of block 806 may include a second OFDM symbol with a CP. In other words, the first OFDM symbol is a special symbol in sidelink communications according to aspects of the present disclosure; the first OFDM symbol consists of a signal without CP and a gap preceding the signal.

In aspects of the present disclosure, the AGC signal of block 804 may include a first orthogonal frequency division multiplexing (OFDM) symbol with a first cyclic prefix (CP) having a length, and the data signal of block 806 may include a second OFDM symbol with a second CP having the length.

According to aspects of the present disclosure, the AGC signal of block 804 may include a first orthogonal frequency division multiplexing (OFDM) symbol comprising a first number of samples, and the data signal of block 806 may include a second OFDM symbol comprising a second number of samples, wherein the second number is larger than the first number. In some such aspects, a UE transmits in the first OFDM symbol a subset of samples from an AGC signal. In some such aspects, a UE transmits in the first OFDM symbol a subset of the samples of the second OFDM symbol; for example, the UE directly repeats a subset of samples from the second OFDM symbol or transmits the second OFDM symbol with extra CP samples, such that the extra CP samples can be used for AGC purposes (e.g., AGC training); in other words, the second symbol has an extra CP that results in the second symbol starting within the duration of the first symbol, and the CP portion that extends into the first symbol may be used for AGC training by a receiver UE. In some other such aspects, a device performing operations 800 may determine the first number such that a length of the gap portion of block 802 is less than a threshold length. In some of these aspects, the threshold length is at least one of a fixed value or configured from a set of candidate values (e.g., 16 or 25 microseconds (µs)).

In aspects of the present disclosure, the sidelink transmission of block 802 may include a sidelink feedback channel, and the data signal of block 806 may include a feedback signal.

According to aspects of the present disclosure, transmitting the AGC signal as in block 804 may include transmitting a copy of a portion of the data signal of block 806. In some such aspects, the portion of the data signal (i.e., the portion transmitted in the AGC signal of block 804) may include a cyclic prefix (CP) of the data signal of block 806.

In aspects of the present disclosure, the sidelink transmission of block 802 may span a slot.

According to aspects of the present disclosure, the sidelink transmission of block 802 may include an instance of a physical sidelink channel (e.g., physical sidelink control channel (PSCCH), physical sidelink shared channel (PSSCH), or physical sidelink feedback channel (PSFCH)).

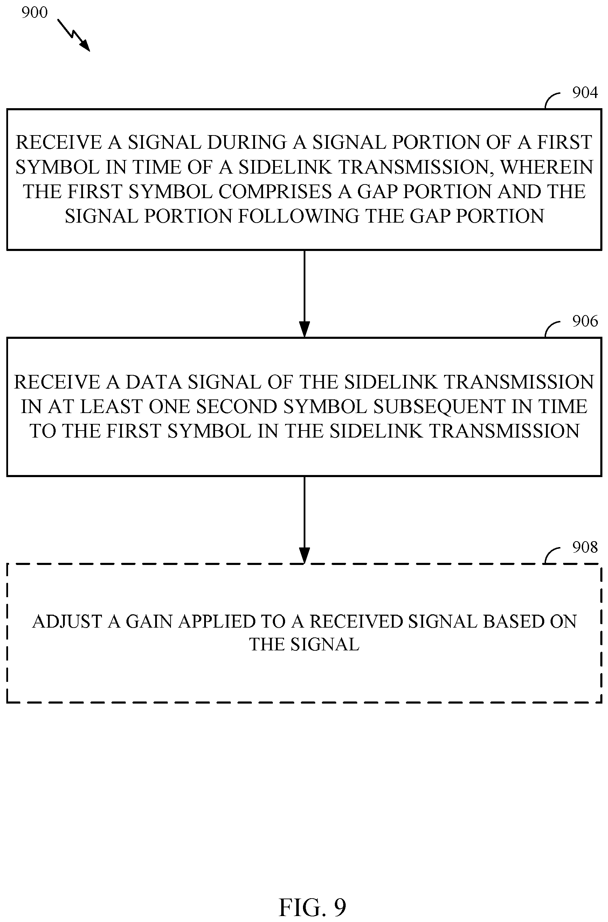

**FIG. 9** is a flow diagram illustrating example operations 900 for wireless communication, in accordance with certain aspects of the present disclosure. The operations 900 may be performed, for example, by another UE (e.g., the UE 120b in the wireless communication network 100). The operations 900 may be complimentary to the operations 800 performed by the UE. The operations 900 may be implemented as software components that are executed and run on one or more processors (e.g., controller/processor 280 of **FIG. 2**). Further, the transmission and reception of signals by the UE in operations 900 may be enabled, for example, by one or more antennas (e.g., antennas 252 of **FIG. 2**). In certain aspects, the transmission and/or reception of signals by the BS may be implemented via a bus interface of one or more processors (e.g., controller/processor 280) obtaining and/or outputting signals.

The operations 900 may begin at block 904 where the UE may receive a signal during a signal portion of a first symbol in time of a sidelink transmission, where the first symbol comprises a gap portion and the signal portion following the gap portion. In certain aspects, the UE may identify the gap portion with a first duration and the signal portion with a second duration, where the first and second durations may be portions of a symbol duration.

Operations 900 may continue at block 906 where the UE may receive a data signal of the sidelink transmission in at least one second symbol subsequent in time to the first symbol in the sidelink transmission.

In certain aspects, the signal may include an AGC signal. The signal may enable the UE to perform automatic gain control operations. For example, optionally, at block 908, the UE may adjust a gain applied to a received signal (e.g., another signal) based on the signal, such as a property of the signal (e.g., the received signal power). That is, the UE may receive another signal and adjust the gain applied to the other received signal based on the signal received at block 904.

According to aspects of the present disclosure, the AGC signal of block 904 may include a first orthogonal frequency division multiplexing (OFDM) symbol without a cyclic prefix (CP); and the data signal of block 906 may include a second OFDM symbol with a CP.

In aspects of the present disclosure, the AGC signal of block 904 may include a first orthogonal frequency division multiplexing (OFDM) symbol with a first cyclic prefix (CP) having a length; and the data signal of block 906 may include a second OFDM symbol with a second CP having the length.

According to aspects of the present disclosure, the AGC signal of block 904 may include a first orthogonal frequency division multiplexing (OFDM) symbol comprising a first number of samples; and the data signal includes a second OFDM symbol comprising a second number of samples, wherein the second number is larger than the first number. In some such aspects, the first OFDM symbol may include a subset of the samples of the second OFDM symbol; for example, a subset of samples from the second OFDM symbol may be included in the first OFDM symbol, or the second OFDM symbol may include extra CP samples, such that the extra CP samples can be used for AGC purposes (e.g., AGC training); in other words, the second symbol has an extra CP that results in the second symbol starting within the duration of the first symbol, and the CP portion that extends into the first symbol may be received by the UE, e.g. to be used for AGC training by the UE. In some other such aspects, a UE performing operations 900 may determine the first number such that a length of the gap portion is less than a threshold length (e.g., duration). In certain aspects, the gap portion may be less than the threshold duration. In some of these other aspects, the threshold length is at least one of a fixed value or configured from a set of candidate values (e.g., 16 or 25 microseconds (µs)).

According to aspects of the present disclosure, the sidelink transmission of block 904 may include a sidelink feedback channel, and the data signal of block 906 may include a feedback signal.

In aspects of the present disclosure, receiving the AGC signal as in block 904 includes receiving a copy of a portion of the data signal of block 906. In some such aspects, the portion of the data signal includes a cyclic prefix (CP) of the data signal of block 906.

According to aspects of the present disclosure, the sidelink transmission of block 904 may span a slot.

According to aspects of the present disclosure, the sidelink transmission of block 904 may include an instance of a physical sidelink channel (e.g., physical sidelink control channel (PSCCH), physical sidelink shared channel (PSSCH), or physical sidelink feedback channel (PSFCH)).

In aspects of the present disclosure, the first symbol (e.g., OFDM symbol) in a sidelink transmission (e.g., first symbol of a slot) may be configured to have a gap part and an AGC part. In the gap part, no signal is transmitted. In the AGC part, there is a signal transmitted, but a transmitting UE may assume that a receiving UE will not decode the signal. That is, the transmitting UE may assume that the receiving UE will use a signal in the AGC part of a symbol for AGC training purposes.

According to aspects of the present disclosure, a UE may transmit an OFDM symbol in the first symbol of the transmission without a cyclic prefix (CP). In examples of NR OFDM implementations, a CP may be added to signals output from an inverse fast Fourier transform (IFFT). In these aspects, there is no CP added to the first OFDM symbol, so this will create a gap between the signal in the first OFDM symbol and a transmission in a previous slot.

According to aspects of the present disclosure, a UE may transmit an OFDM symbol in the first symbol of a transmission with a CP that has the same length as CPs of other symbols in the slot. In examples of OFDM implementations, the CP added to the first symbol in a slot may be longer than CPs of the other symbols in the slot, and a slot will have a duration of 1/2*^{µ}* ms, where *µ* = 0,1,2,..., depending on a numerology and/or subcarrier spacing of the NR OFDM implementation. In these aspects, the first symbol in the transmission (e.g., first symbol in a slot) does not have the extra CP length of an NR OFDM implementation, which results in a gap between the transmission in the first symbol of the slot and a transmission in a previous slot.

In aspects of the present disclosure, a UE may transmit an OFDM symbol in the first symbol that has fewer samples than other symbols in the slot. For example, a UE may just transmit the last portion of samples in the first OFDM symbol (these samples may be generated from an AGC signal of the first OFDM symbol), such that there is a gap in the beginning of the transmission that lasts less than or equal to a threshold (e.g., 16 or 25 µs). In other aspects, a UE may transmit a subset of samples of the second OFDM symbol; the subset of samples may serve as an AGC signal. As used herein, a symbol may be viewed as having a certain number of samples in the time domain, for example, for a Fast Fourier Transform (FFT) and/or an inverse FFT (IFFT). A subset or portion of samples of a symbol may refer to a segment or portion of a symbol in the time domain. In one example, the UE determines number of samples that can be transmitted in the first symbol, copies the number of samples from the second OFDM symbol (e.g., from the last portion of samples in the second OFDM symbol), and transmits the number of samples in the first symbol. In another example, the UE may be configured to add an extra CP to the second OFDM symbol, such that part of the CP of the second OFDM symbol is transmitted in the first OFDM symbol and serves as an AGC signal.

According to aspects of the present disclosure, receiving the AGC signal as in block 904 may include receiving a copy of a portion of the data signal of block 906. In some such aspects, the portion of the data signal (i.e., the portion transmitted in the AGC signal of block 804) may include a cyclic prefix (CP) of the data signal of block 906.

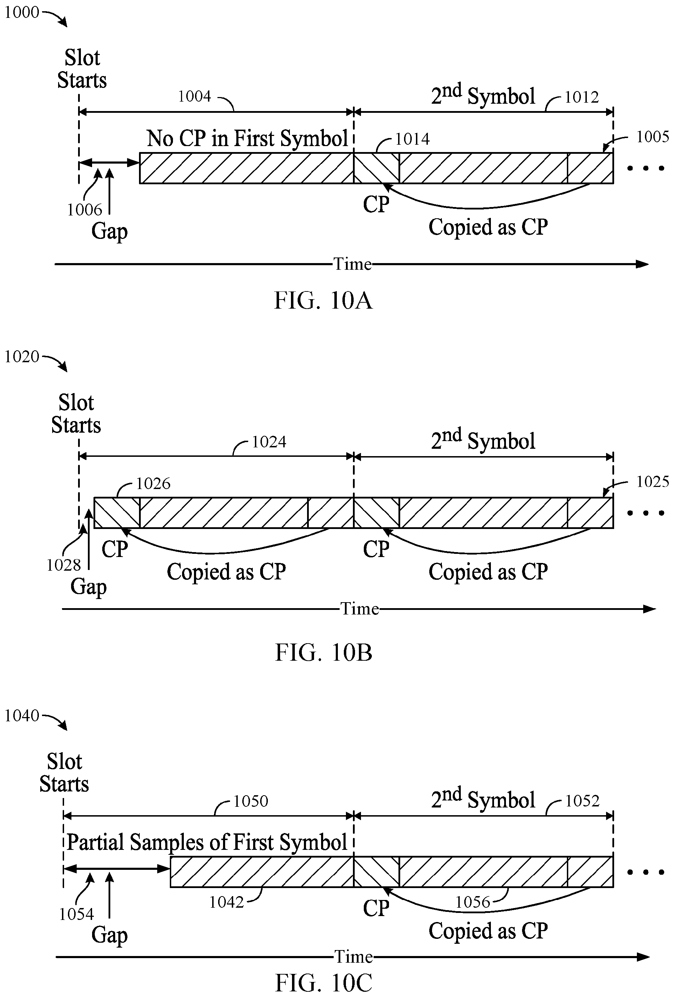

**FIGs. 10A-E** are example transmission timelines 1000, 1020, 1040, 1060, and 1080 for having a gap period and an AGC signal in a first symbol of a slot, in accordance with aspects of the present disclosure. Referring to **FIG. 10A****,** in the example transmission timeline 1000, a UE (e.g., UE 120a in wireless network 100) transmits an OFDM symbol in the first symbol 1004 of the transmission 1005 without a cyclic prefix (CP). The lack of the CP in the first OFDM symbol 1004 results in a gap 1006 at the beginning of the slot. That is, the UE may refrain from transmitting during the gap 1006, which may have the same duration as a CP of another symbol, such as a CP 1014. The UE transmits another OFDM symbol 1012 with the CP 1014 in the next symbol of the transmission 1005.

Referring to **FIG. 10B****,** in the example transmission timeline 1020, a UE transmits an OFDM symbol in the first symbol 1024 of a transmission 1025 with a CP 1026 that has the same length as CPs of other symbols in the slot. In these aspects, the first symbol 1024 in the transmission 1025 (e.g., first symbol in a slot) may not have the extra CP length of an extended CP (e.g., of an example NR OFDM implementation including extra samples than a normal CP), which results in a gap 1028 between the transmission in the first symbol 1024 of the slot and a potential transmission in a previous slot (not shown). That is, the UE may refrain from transmitting during the gap 1028, which may have a duration equivalent to the difference between the durations of an extended CP and a normal CP.

As shown in **FIG. 10C****,** in the example transmission timeline 1040, a UE transmits an OFDM symbol in the first symbol 1050 that has fewer samples 1042 than other symbols (e.g., the second symbol 1052) in the slot. The first symbol 1050 may have a first number of samples 1042, which may be less than a second number of samples 1056 of the second symbol 1052. In other words, the second number of samples 1056 may be greater than the first number of samples. Thus, there is a gap 1054 in the beginning of the transmission that is less than or equal to a threshold (e.g., 16 or 25 µs). In other words, the UE may refrain from transmitting during the gap 1054 for a subset of the samples that make up an OFDM symbol, such as the first symbol 1050.

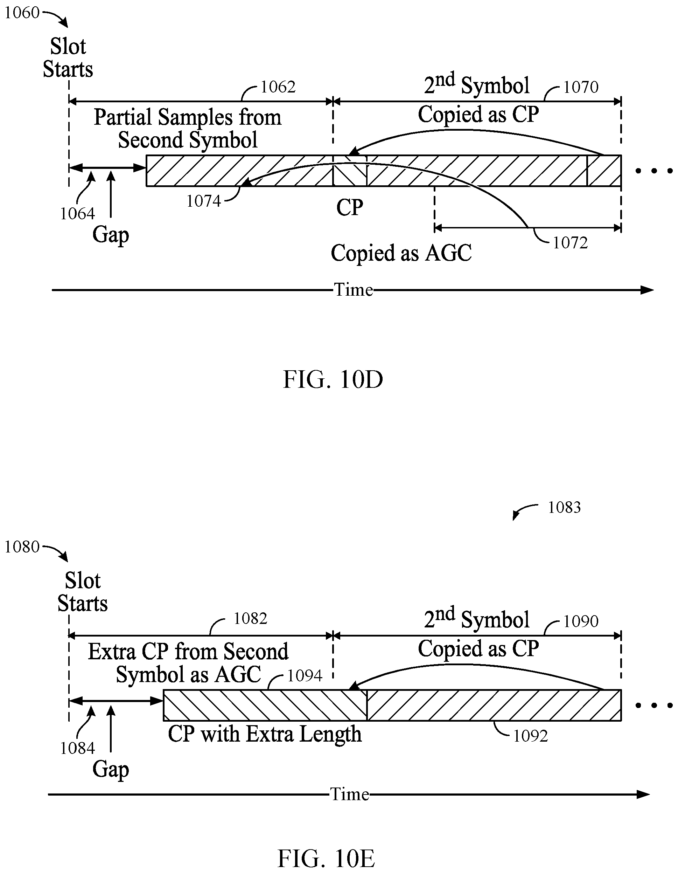

As illustrated in **FIG. 10D****,** in the example transmission timeline 1060, a UE copies a portion 1072 of the second symbol 1070 and transmits that portion as an AGC signal 1074 in the first symbol 1062. The portion copied is less than the length of a symbol, and thus, there is a gap 1064 in the beginning of the transmission that lasts less than or equal to a threshold (e.g., 16 or 25 µs). In other words, the UE may refrain from transmitting during the gap 1064, which may have a duration equivalent to the difference between the duration of a symbol and the duration of the portion 1072.

Referring to **FIG. 10E****,** in the example transmission timeline 1080, a UE copies a portion 1092 or all of the second symbol 1090 and transmits that portion as a filler signal 1094, which may serve as a CP with extra length. an extended CP, for the second symbol 1090 and/or an AGC signal. The filler signal 1094 may be arranged in the first and second symbols 1082, 1090, where the filler signal 1094 takes up a portion of each of the first and second symbols 1082, 1090. The portion copied into the first symbol 1082 is less than the length of a symbol and thus, there is a gap 1084 in the beginning of the transmission 1083 that lasts no more than a threshold length (e.g., 16 or 25 µs). In other words, the UE may refrain from transmitting during the gap 1084, which may have a duration less than a threshold.

According to aspects of the present disclosure, the disclosed techniques are applicable to the first symbol (e.g., in time) of a sidelink transmission. For sidelink transmissions starting from the first symbol of a slot, the disclosed techniques may be applicable to the first symbol of a slot.

In aspects of the present disclosure, for sidelink feedback transmission (e.g., HARQ feedback), the disclosed techniques may applicable to the first symbol of a receiving UE's transmission of HARQ feedback.

According to aspects of the present disclosure, the disclosed techniques may be adapted to both transmitting and receiving UEs.

In aspects of the present disclosure, a transmitting UE (e.g., a UE transmitting sidelink control, sidelink data, or sidelink feedback) may be configured to transmit from the first symbol of the transmission (e.g., first symbol of a slot), until the end of the transmission, which may be the last symbol of a slot. The transmitting UE may be configured to transmit the first symbol with a regular CP length (i.e., same CP length as other symbols), without a CP, or with part of the samples of the first symbol, or part of the samples of the second symbol, or transmit the second symbol with extra CP length.

According to aspects of the present disclosure, a receiving UE (e.g., a UE receiving sidelink control, sidelink data, or sidelink feedback) may be configured to start receiving following a gap in the first symbol of the transmission (e.g., first symbol of a slot). The gap has a pre-determined duration that may be the additional length of CP for a first symbol compared to other symbols, length of CP of other symbols, length of CP in a first symbol of a slot, or a (pre)-configured length that is no larger than a threshold (e.g., 16 or 25 µs, etc.).

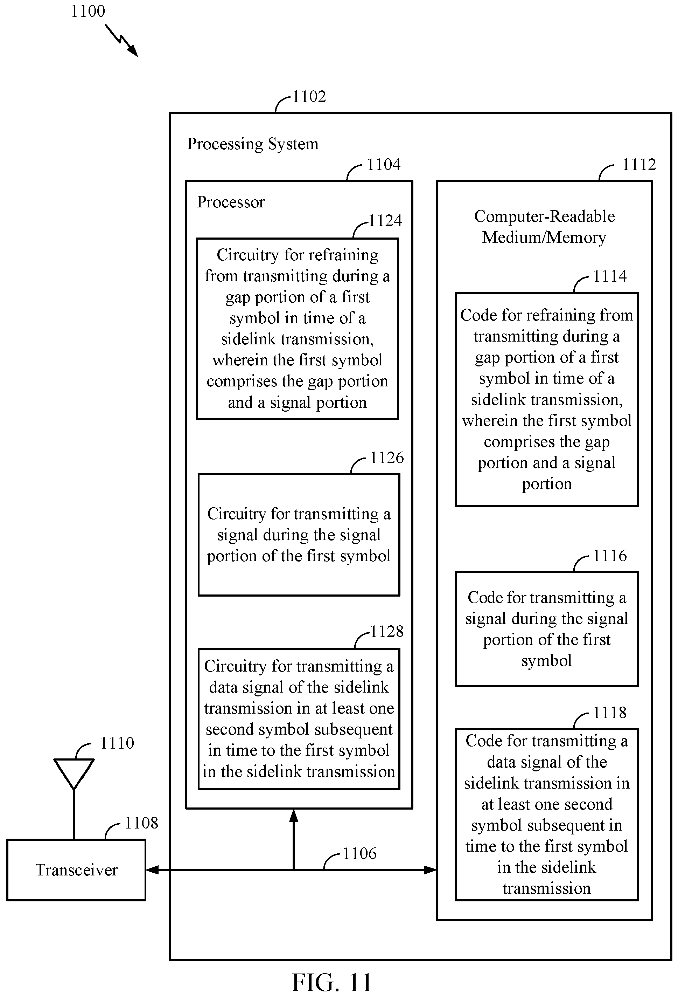

**FIG. 11** illustrates a communications device 1100 that may include various components (e.g., corresponding to means-plus-function components) configured to perform operations for the techniques disclosed herein, such as the operations illustrated in FIG. 8. The communications device 1100 includes a processing system 1102 coupled to a transceiver 1108 (e.g., a transmitter and/or a receiver). The transceiver 1108 is configured to transmit and receive signals for the communications device 1100 via an antenna 1110, such as the various signals as described herein. The processing system 1102 may be configured to perform processing functions for the communications device 1100, including processing signals received and/or to be transmitted by the communications device 1100.

The processing system 1102 includes a processor 1104 coupled to a computer-readable medium/memory 1112 via a bus 1106. In certain aspects, the computer-readable medium/memory 1112 is configured to store instructions (e.g., computer-executable code) that when executed by the processor 1104, cause the processor 1104 to perform the operations illustrated in FIG. 8, or other operations for performing the various techniques discussed herein for having a gap portion and a signal portion. In certain aspects, computer-readable medium/memory 1112 stores code 1114 for refraining from transmitting during a gap portion of a first symbol in time of a sidelink transmission, wherein the first symbol comprises the gap portion and a signal portion; code 1116 for transmitting a signal during the signal portion of the first symbol; and code 1118 for transmitting a data signal of the sidelink transmission in at least one second symbol subsequent in time to the first symbol in the sidelink transmission. In certain aspects, the processor 1104 has circuitry configured to implement the code stored in the computer-readable medium/memory 1112. The processor 1104 includes circuitry 1124 for refraining from transmitting during a gap portion of a first symbol in time of a sidelink transmission, wherein the first symbol comprises the gap portion and a signal portion; circuitry 1126 for transmitting a signal during the signal portion of the first symbol; and circuitry 1128 for transmitting a data signal of the sidelink transmission in at least one second symbol subsequent in time to the first symbol in the sidelink transmission.

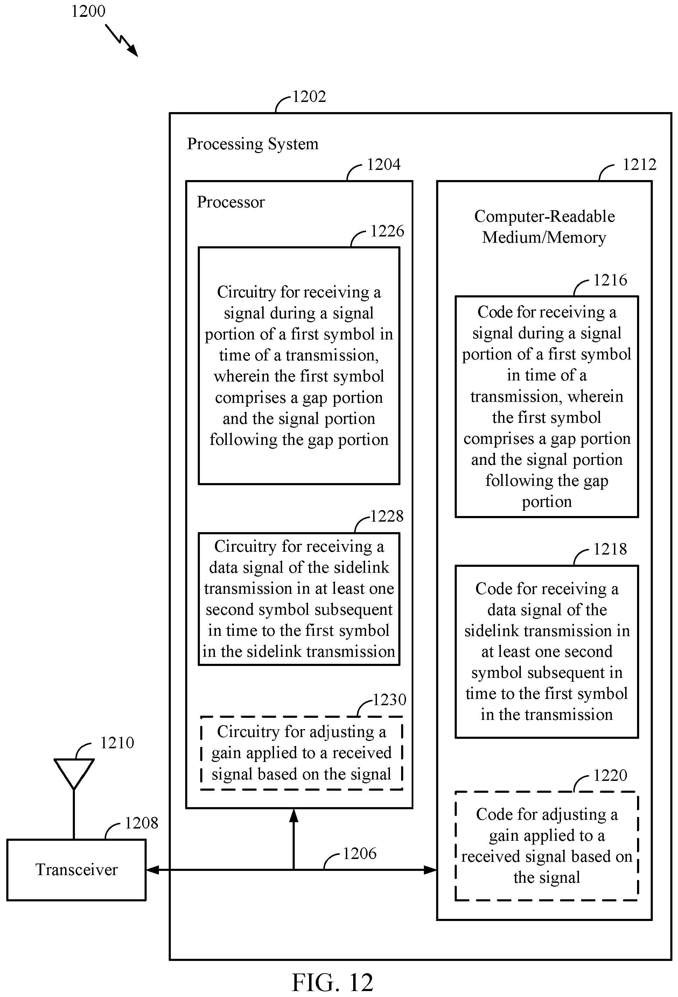

**FIG. 12** illustrates a communications device 1200 that may include various components (e.g., corresponding to means-plus-function components) configured to perform operations for the techniques disclosed herein, such as the operations illustrated in **FIG.** 9. The communications device 1200 includes a processing system 1202 coupled to a transceiver 1208 (e.g., a transmitter and/or a receiver). The transceiver 1208 is configured to transmit and receive signals for the communications device 1200 via an antenna 1210, such as the various signals as described herein. The processing system 1202 may be configured to perform processing functions for the communications device 1200, including processing signals received and/or to be transmitted by the communications device 1200.

The processing system 1202 includes a processor 1204 coupled to a computer-readable medium/memory 1212 via a bus 1206. In certain aspects, the computer-readable medium/memory 1212 is configured to store instructions (e.g., computer-executable code) that when executed by the processor 1204, cause the processor 1204 to perform the operations illustrated in FIG. 9, or other operations for performing the various techniques discussed herein for having a gap portion and a signal portion. In certain aspects, computer-readable medium/memory 1212 stores code 1216 for receiving a signal during a signal portion of a first symbol in time of a sidelink transmission, wherein the first symbol comprises a gap portion and the signal portion following the gap portion; code 1218 for receiving a data signal of the sidelink transmission in at least one second symbol subsequent in time to the first symbol in the sidelink transmission; and/or code 1220 for adjusting a gain applied to a received signal based on the signal. In certain aspects, the processor 1204 has circuitry configured to implement the code stored in the computer-readable medium/memory 1212. The processor 1204 includes circuitry 1226 for receiving a signal during a signal portion of a first symbol in time of a sidelink transmission, wherein the first symbol comprises a gap portion and the signal portion following the gap portion; circuitry 1228 for receiving a data signal of the sidelink transmission in at least one second symbol subsequent in time to the first symbol in the sidelink transmission; and/or circuitry 1230 for adjusting a gain applied to a received signal based on the signal.

Means for transmitting (or means for outputting for transmission) may include an antenna (e.g., the antennas 252a-252r), a transceiver (e.g., the transceivers 254a-254r), a processor (e.g., the controller/processor 280), and/or circuitry for receiving (e.g., the circuitry for transmitting 1126, 1128). Means for receiving (or means for obtaining) may include an antenna (e.g., the antennas 252a-252r), a transceiver (e.g., the transceivers 254a-254r), a processor (e.g., the controller/processor 280), and/or circuitry for receiving (e.g., the circuitry for receiving 1226, 1228). Means for refraining from transmitting may include a transceiver (e.g., the transceivers 254a-254r), a processor (e.g., the controller/processor 280), and/or circuitry for refraining (e.g., the circuitry for refraining 1124). Means for adjusting may include a transceiver (e.g., the transceivers 254a-254r), a processor (e.g., the controller/processor 280), and/or circuitry for adjusting (e.g., the circuitry for adjusting 1230). In aspects, the various processors and/or various circuitry may include a circuit, a central processing unit (CPU), a graphics processing unit (GPU), a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein.

### Additional Considerations

The techniques described herein may be used for various wireless communication technologies, such as NR (e.g., 5G NR), 3GPP Long Term Evolution (LTE), LTE-Advanced (LTE-A), code division multiple access (CDMA), time division multiple access (TDMA), frequency division multiple access (FDMA), orthogonal frequency division multiple access (OFDMA), single-carrier frequency division multiple access (SC-FDMA), time division synchronous code division multiple access (TD-SCDMA), and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS). LTE and LTE-A are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). NR is an emerging wireless communications technology under development.

In 3GPP, the term "cell" can refer to a coverage area of a Node B (NB) and/or a NB subsystem serving this coverage area, depending on the context in which the term is used. In NR systems, the term "cell" and BS, next generation NodeB (gNB or gNodeB), access point (AP), distributed unit (DU), carrier, or transmission reception point (TRP) may be used interchangeably. A BS may provide communication coverage for a macro cell, a pico cell, a femto cell, and/or other types of cells. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having an association with the femto cell (e.g., UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS.

A UE may also be referred to as a mobile station, a terminal, an access terminal, a subscriber unit, a station, a Customer Premises Equipment (CPE), a cellular phone, a smart phone, a personal digital assistant (PDA), a wireless modem, a wireless communication device, a handheld device, a laptop computer, a cordless phone, a wireless local loop (WLL) station, a tablet computer, a camera, a gaming device, a netbook, a smartbook, an ultrabook, an appliance, a medical device or medical equipment, a biometric sensor/device, a wearable device such as a smart watch, smart clothing, smart glasses, a smart wrist band, smart jewelry (e.g., a smart ring, a smart bracelet, etc.), an entertainment device (e.g., a music device, a video device, a satellite radio, etc.), a vehicular component or sensor, a smart meter/sensor, industrial manufacturing equipment, a global positioning system device, or any other suitable device that is configured to communicate via a wireless or wired medium. Some UEs may be considered machine-type communication (MTC) devices or evolved MTC (eMTC) devices. MTC and eMTC UEs include, for example, robots, drones, remote devices, sensors, meters, monitors, location tags, etc., that may communicate with a BS, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, which may be narrowband IoT (NB-IoT) devices.

In some examples, access to the air interface may be scheduled. A scheduling entity (e.g., a BS) allocates resources for communication among some or all devices and equipment within its service area or cell. The scheduling entity may be responsible for scheduling, assigning, reconfiguring, and releasing resources for one or more subordinate entities. That is, for scheduled communication, subordinate entities utilize resources allocated by the scheduling entity. Base stations are not the only entities that may function as a scheduling entity. In some examples, a UE may function as a scheduling entity and may schedule resources for one or more subordinate entities (e.g., one or more other UEs), and the other UEs may utilize the resources scheduled by the UE for wireless communication. In some examples, a UE may function as a scheduling entity in a peer-to-peer (P2P) network, and/or in a mesh network. In a mesh network example, UEs may communicate directly with one another in addition to communicating with a scheduling entity.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more. Moreover, nothing disclosed herein is intended to be dedicated to the public regardless of whether such disclosure is explicitly recited in the claims.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal (see **FIG. 1**), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer-readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein, for example, instructions for performing the operations described herein and illustrated in **FIG. 8** and/or **FIG. 9****.**

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

The scope of protection of the invention is limited by the appended claims.

## Claims

1. An apparatus (1100) for wireless communications, comprising:
a memory (1112); and
a processor (1104) coupled to the memory, the processor and the memory being configured to:
refrain from transmitting during a gap portion of a first symbol in time of a sidelink transmission, wherein the first symbol comprises the gap portion and a signal portion,
transmit a signal during the signal portion of the first symbol, wherein the signal is an automatic gain control signal; and
transmit a data signal of the sidelink transmission in at least one second symbol subsequent in time to the first symbol in the sidelink transmission.

2. The apparatus of claim 1, wherein:
the signal comprises a first orthogonal frequency division multiplexing, OFDM symbol without a cyclic prefix, CP; and
the data signal comprises a second OFDM symbol with a CP; or
the signal comprises a first orthogonal frequency division multiplexing, OFDM, symbol comprising a first number of samples of the first OFDM symbol; and
the data signal comprises a second OFDM symbol comprising a second number of samples of the second OFDM symbol, wherein the second number is greater than the first number; or
the signal comprises a first orthogonal frequency division multiplexing, OFDM, symbol with a first cyclic prefix, CP, having a length; and
the data signal comprises a second OFDM symbol with a second CP having the length.

3. The apparatus of claim 2, wherein the first OFDM symbol comprises a subset of the samples of the second OFDM symbol.

4. The apparatus of claim 1, wherein the gap portion is less than a threshold duration in time; and / or
wherein the sidelink transmission comprises a sidelink feedback channel, and wherein the data signal comprises a feedback signal; and / or
wherein the processor and the memory are configured to transmit a copy of a portion of the data signal; and / or
wherein the sidelink transmission spans a slot.

5. The apparatus of claim 4, wherein the portion of the data signal comprises a cyclic prefix, CP, of the data signal.

6. An apparatus (1200) for wireless communications, comprising:
a memory (1212); and
a processor coupled to the memory, the processor and the memory being configured to:
receive a signal during a signal portion of a first symbol in time of a sidelink transmission, wherein the first symbol comprises a gap portion and the signal portion following the gap portion, wherein the signal is an automatic gain control signal; and
receive a data signal of the sidelink transmission in at least one second symbol subsequent in time to the first symbol in the sidelink transmission; and
receive another signal and adjust a gain applied to the other signal based on the automatic gain control signal.

7. The apparatus of claim 6, wherein:
the signal comprises a first orthogonal frequency division multiplexing, OFDM, symbol without a cyclic prefix, CP; and
the data signal comprises a second OFDM symbol with a CP; or
the signal comprises a first orthogonal frequency division multiplexing, OFDM, symbol comprising a first number of samples of the first OFDM symbol, and
the data signal comprises a second OFDM symbol comprising a second number of samples of the second OFDM symbol, wherein the second number is greater than the first number; or
the signal comprises a first orthogonal frequency division multiplexing, OFDM, symbol with a first cyclic prefix, CP, having a length, and
the data signal comprises a second OFDM symbol with a second CP having the length.

8. The apparatus of claim 7, wherein the first OFDM symbol comprises a subset of the samples of the second OFDM symbol.

9. The apparatus of claim 6, wherein the gap portion is less than a threshold duration in time; and / or
wherein the sidelink transmission comprises a sidelink feedback channel, and wherein the data signal comprises a feedback signal; and / or
wherein the processor and the memory are configured to receive a copy of a portion of the data signal; and / or
wherein the sidelink transmission spans a slot.

10. The apparatus of claim 9, wherein the portion of the data signal comprises a cyclic prefix, CP, of the data signal.

11. A transmitting method (800) for wireless communications, comprising:
refraining (802) from transmitting during a gap portion of a first symbol in time of a sidelink transmission, wherein the first symbol comprises the gap portion and a signal portion;
transmitting (804) a signal during the signal portion of the first symbol, wherein the signal is an automatic gain control signal; and
transmitting (806) a data signal of the sidelink transmission in at least one second symbol subsequent in time to the first symbol in the sidelink transmission.

12. A receiving method (900) for wireless communications, comprising:
receiving (904) a signal during a signal portion of a first symbol in time of a sidelink transmission, wherein the first symbol comprises a gap portion and the signal portion following the gap portion, wherein the signal is an automatic gain control signal;
receiving (906) a data signal of the sidelink transmission in at least one second symbol subsequent to the first symbol in the sidelink transmission; and
receiving (908) another signal and adjusting a gain applied to the other signal based on the automatic gain control signal.

13. A computer program for wireless communications, comprising instructions for carrying out the method of claim 11 when being executed by a processor of a wireless communication apparatus.

14. A computer program for wireless communications, comprising instructions for carrying out the method of claim 12 when being executed by a processor of a wireless communication apparatus.

## Patentansprüche

1. Eine Vorrichtung (1100) für drahtlose Kommunikationen, umfassend:
einen Speicher (1112); und
einen Prozessor (1104), der mit dem Speicher gekoppelt ist, wobei der Prozessor und der Speicher konfiguriert sind zum:
Unterlassen des Übertragens während eines Lückenabschnitts eines ersten Symbols in der Zeit einer Sidelink-Übertragung, wobei das erste Symbol den Lückenabschnitt und einen Signalabschnitt umfasst,
Übertragen eines Signals während des Signalabschnitts des ersten Symbols, wobei das Signal ein automatisches Zuwachssteuerungssignal ist; und
Übertragen eines Datensignals der Sidelink-Übertragung in mindestens einem zweiten Symbol zeitlich nach dem ersten Symbol in der Sidelink-Übertragung.

2. Vorrichtung nach Anspruch 1, wobei:
das Signal ein erstes orthogonales Frequenzmultiplex-, OFDM-, Symbol ohne ein zyklisches Präfix, CP, umfasst; und
das Datensignal ein zweites OFDM-Symbol mit einem CP umfasst; oder
das Signal ein erstes orthogonales Frequenzmultiplex-, OFDM-, Symbol umfasst, das eine erste Anzahl von Abtastwerten des ersten OFDM-Symbols umfasst; und
das Datensignal ein zweites OFDM-Symbol umfasst, das eine zweite Anzahl von Abtastwerten des zweiten OFDM-Symbols umfasst, wobei die zweite Anzahl größer als die erste Anzahl ist; oder
das Signal ein erstes orthogonales Frequenzmultiplex-, OFDM-, Symbol mit einem ersten zyklischen Präfix, CP, mit einer Länge umfasst; und
das Datensignal ein zweites OFDM-Symbol mit einem zweiten CP mit der Länge umfasst.

3. Vorrichtung nach Anspruch 2, wobei das erste OFDM-Symbol eine Teilmenge der Abtastwerte des zweiten OFDM-Symbols umfasst.

4. Vorrichtung nach Anspruch 1, wobei der Lückenabschnitt kleiner als eine Schwellendauer in der Zeit ist; und/oder
wobei die Sidelink-Übertragung einen Sidelink-Rückkopplungskanal umfasst und wobei das Datensignal ein Rückkopplungssignal umfasst; und/oder
wobei der Prozessor und der Speicher konfiguriert sind zum Übertragen einer Kopie eines Abschnitts des Datensignals; und/oder
wobei die Sidelink-Übertragung einen Schlitz überspannt.

5. Vorrichtung nach Anspruch 4, wobei der Abschnitt des Datensignals ein zyklisches Präfix, CP, des Datensignals umfasst.

6. Eine Vorrichtung (1200) für drahtlose Kommunikationen, umfassend:
einen Speicher (1212); und
einen Prozessor, der mit dem Speicher gekoppelt ist, wobei der Prozessor und der Speicher konfiguriert sind zum:
Empfangen eines Signals während eines Signalabschnitts eines ersten Symbols in der Zeit einer Sidelink-Übertragung, wobei das erste Symbol einen Lückenabschnitt umfasst und der Signalabschnitt dem Lückenabschnitt folgt, wobei das Signal ein automatisches Zuwachssteuerungssignal ist; und
Empfangen eines Datensignals der Sidelink-Übertragung in mindestens einem zweiten Symbol zeitlich nach dem ersten Symbol in der Sidelink-Übertragung; und
Empfangen eines anderen Signals und Anpassen eines an das andere Signal angelegten Zuwachses basierend auf dem automatischen Zuwachssteuerungssignal.

7. Vorrichtung nach Anspruch 6, wobei:
das Signal ein erstes orthogonales Frequenzmultiplex-, OFDM-, Symbol ohne ein zyklisches Präfix, CP, umfasst; und
das Datensignal ein zweites OFDM-Symbol mit einem CP umfasst; oder
das Signal ein erstes orthogonales Frequenzmultiplex-, OFDM-, Symbol umfasst, das eine erste Anzahl von Abtastwerten des ersten OFDM-Symbols umfasst, und
das Datensignal ein zweites OFDM-Symbol umfasst, das eine zweite Anzahl von Abtastwerten des zweiten OFDM-Symbols umfasst, wobei die zweite Anzahl größer als die erste Anzahl ist; oder
das Signal ein erstes orthogonales Frequenzmultiplex-, OFDM-, Symbol mit einem ersten zyklischen Präfix, CP, mit einer Länge umfasst, und
das Datensignal ein zweites OFDM-Symbol mit einem zweiten CP mit der Länge umfasst.

8. Vorrichtung nach Anspruch 7, wobei das erste OFDM-Symbol eine Teilmenge der Abtastwerte des zweiten OFDM-Symbols umfasst.

9. Vorrichtung nach Anspruch 6, wobei der Lückenabschnitt kleiner als eine Schwellendauer in der Zeit ist; und/oder
wobei die Sidelink-Übertragung einen Sidelink-Rückkopplungskanal umfasst und wobei das Datensignal ein Rückkopplungssignal umfasst; und/oder
wobei der Prozessor und der Speicher konfiguriert sind zum Empfangen einer Kopie eines Abschnitts des Datensignals; und/oder
wobei die Sidelink-Übertragung einen Schlitz überspannt.

10. Vorrichtung nach Anspruch 9, wobei der Abschnitt des Datensignals ein zyklisches Präfix, CP, des Datensignals umfasst.

11. Ein Übertragungsverfahren (800) für drahtlose Kommunikationen, umfassend:
Unterlassen (802) des Übertragens während eines Lückenabschnitts eines ersten Symbols in der Zeit einer Sidelink-Übertragung, wobei das erste Symbol den Lückenabschnitt und einen Signalabschnitt umfasst;
Übertragen (804) eines Signals während des Signalabschnitts des ersten Symbols, wobei das Signal ein automatisches Zuwachssteuerungssignal ist; und
Übertragen (806) eines Datensignals der Sidelink-Übertragung in mindestens einem zweiten Symbol zeitlich nach dem ersten Symbol in der Sidelink-Übertragung.

12. Ein Empfangsverfahren (900) für drahtlose Kommunikationen, umfassend:
Empfangen (904) eines Signals während eines Signalabschnitts eines ersten Symbols in der Zeit einer Sidelink-Übertragung, wobei das erste Symbol einen Lückenabschnitt umfasst und der Signalabschnitt dem Lückenabschnitt folgt, wobei das Signal ein automatisches Zuwachssteuerungssignal ist;
Empfangen (906) eines Datensignals der Sidelink-Übertragung in mindestens einem zweiten Symbol zeitlich nach dem ersten Symbol in der Sidelink-Übertragung; und
Empfangen (908) eines anderen Signals und Anpassen eines an das andere Signal angelegten Zuwachses basierend auf dem automatischen Zuwachssteuerungssignal.

13. Ein Computerprogramm für drahtlose Kommunikationen, umfassend Anweisungen zum Ausführen des Verfahrens gemäß Anspruch 11, wenn es von einem Prozessor einer drahtlosen Kommunikationsvorrichtung ausgeführt wird.

14. Ein Computerprogramm für drahtlose Kommunikationen, umfassend Anweisungen zum Ausführen des Verfahrens gemäß Anspruch 12, wenn es von einem Prozessor einer drahtlosen Kommunikationsvorrichtung ausgeführt wird.

## Revendications

1. Un appareil (1100) pour des communications sans fil, comprenant :
une mémoire (1112) ; et
un processeur (1104) couplé à la mémoire, le processeur et la mémoire étant configurés pour :
s'abstenir de transmettre pendant une partie d'intervalle d'un premier symbole dans le temps d'une transmission sidelink, le premier symbole comprenant la partie d'intervalle et une partie de signal ;
transmettre un signal pendant la partie de signal du premier symbole, le signal étant un signal de contrôle automatique de gain ; et
transmettre un signal de données de la transmission sidelink dans au moins un second symbole consécutif dans le temps au premier symbole dans la transmission sidelink.

2. L'appareil de la revendication 1, dans lequel :
le signal comprend un premier symbole à multiplexage par répartition en fréquences orthogonales, OFDM, sans préfixe cyclique, CP ; et
le signal de données comprend un second symbole OFDM avec un CP ; ou
le signal comprend un premier symbole à multiplexage par répartition en fréquences orthogonales, OFDM, comprenant un premier nombre d'échantillons du premier symbole OFDM ; et
le signal de données comprend un second symbole OFDM comprenant un second nombre d'échantillons du second symbole OFDM, le second nombre étant supérieur au premier nombre ; ou
le signal comprend un premier symbole à multiplexage par répartition en fréquences orthogonales, OFDM, avec un premier préfixe cyclique, CP, ayant une longueur ; et
le signal de données comprend un second symbole OFDM avec un second CP ayant la longueur.

3. L'appareil de la revendication 2, dans lequel le premier symbole OFDM comprend un sous-ensemble des échantillons du second symbole OFDM.

4. L'appareil de la revendication 1, dans lequel la partie d'intervalle est inférieure à un seuil de durée dans le temps ; et/ou
dans lequel la transmission sidelink comprend un canal de retour sidelink, et dans lequel le signal de données comprend un signal de retour ; et/ou
dans lequel le processeur et la mémoire sont configurés pour transmettre une copie d'une partie du signal de données ; et/ou
dans lequel la transmission sidelink s'étend sur un slot.

5. L'appareil de la revendication 4, dans lequel la partie de signal de données comprend un préfixe cyclique, CP, du signal de données.

6. Un appareil (1200) pour des communications sans fil, comprenant :
une mémoire (1212) ; et
un processeur couplé à la mémoire, le processeur et la mémoire étant configurés pour :
recevoir un signal pendant une partie de signal d'un premier symbole dans le temps d'une transmission sidelink, le premier symbole comprenant une partie d'intervalle et la partie de signal faisant suite à la partie d'intervalle, le signal étant un signal de contrôle automatique de gain ; et
recevoir un signal de données de la transmission sidelink dans au moins un second signal consécutif dans le temps au premier symbole dans la transmission sidelink ; et
recevoir un autre signal et ajuster un gain appliqué à l'autre signal sur la base du signal de contrôle automatique de gain.

7. L'appareil de la revendication 6, dans lequel :
le signal comprend un premier symbole à multiplexage par répartition en fréquences orthogonales, OFDM, sans préfixe cyclique, CP ; et
le signal de données comprend un second symbole OFDM avec un CP ; ou
le signal comprend un premier symbole à multiplexage par répartition en fréquences orthogonales, OFDM, comprenant un premier nombre d'échantillons du premier symbole OFDM ; et
le signal de données comprend un second symbole OFDM comprenant un second nombre d'échantillons du second symbole OFDM, le second nombre étant supérieur au premier nombre ; ou
le signal comprend un premier symbole à multiplexage par répartition en fréquences orthogonales, OFDM, avec un premier préfixe cyclique, CP, ayant une longueur ; et
le signal de données comprend un second symbole OFDM avec un second CP ayant la longueur.

8. L'appareil de la revendication 7, dans lequel le premier symbole OFDM comprend un sous-ensemble des échantillons du second symbole OFDM.

9. L'appareil de la revendication 6, dans lequel la partie d'intervalle est inférieure à un seuil de durée dans le temps ; et/ou
dans lequel la transmission sidelink comprend un canal de retour sidelink, et dans lequel le signal de données comprend un signal de retour ; et/ou
dans lequel le processeur et la mémoire sont configurés pour transmettre une copie d'une partie du signal de données ; et/ou
dans lequel la transmission sidelink s'étend sur un slot.

10. L'appareil de la revendication 9, dans lequel la partie de signal de données comprend un préfixe cyclique, CP, du signal de données.

11. Un procédé de transmission (800) pour des communications sans fil comprenant :
l'abstention (802) de transmettre pendant une partie d'intervalle d'un premier symbole dans le temps d'une transmission sidelink, le premier symbole comprenant la partie d'intervalle et une partie de signal ;
la transmission (804) d'un signal pendant la partie de signal du premier symbole, le signal étant un signal de contrôle automatique de gain ; et
la transmission (806) d'un signal de données de la transmission sidelink dans au moins un second symbole consécutif dans le temps au premier symbole dans la transmission sidelink.

12. Un procédé de réception (900) pour des communications sans fil, comprenant :
la réception (904) d'un signal pendant une partie de signal d'un premier symbole dans le temps d'une transmission sidelink, le premier symbole comprenant une partie d'intervalle et la partie de signal faisant suite à la partie d'intervalle, le signal étant un signal de contrôle automatique de gain ;
la réception (906) d'un signal de données de la transmission sidelink dans au moins un second signal consécutif dans le temps au premier symbole dans la transmission sidelink ; et
la réception (908) d'un autre signal et ajuster un gain appliqué à l'autre signal sur la base du signal de contrôle automatique de gain.

13. Un programme informatique pour des communications sans fil, comprenant des instructions pour mettre en œuvre le procédé de la revendication 11 lorsqu'il est exécuté par un processeur d'un appareil de communication sans fil.

14. Un programme informatique pour des communications sans fil, comprenant des instructions pour mettre en œuvre le procédé de la revendication 12 lorsqu'il est exécuté par un processeur d'un appareil de communication sans fil.
